# EUROPEAN PATENT APPLICATION

(11) **EP 3 163 434 A1**
(43) Date of publication of application: **03.05.2017**
(21) Application number: 15810966.0
(22) Date of filing: 25.06.2015
(51) Int. Cl.: G06F 9/44

(54) **SOFTWARE ELEMENT MODEL-BASED UNIVERSAL SOFTWARE MODELLING METHOD FOR CONSTRUCTING SOFTWARE MODEL**

(30) Priority: 25.06.2014 CN 201410291096
(71) Applicant: Chengdu Puzhong Software Limited Company, Chengdu, Sichuan 610041 (CN)
(72) Inventor: FU, Changming, Chengdu Sichuan 610057 (CN); LONG, Chunsheng, Chengdu Sichuan 610041 (CN); TANG, Hong, Chengdu Sichuan 610045 (CN)
(74) Representative: Gallego Jiménez, José Fernando
(86) International application number: PCT/CN2015/000454
(87) International publication number: WO 2015/196783

(57) **Abstract**

Software element model based univeral software modeling method to construct software model. After determining basic constituents of the software element model, the present invention constructs software models through the software hierarchy model, the software interface models, the software interaction models, the software algorithm model, the software process model, and the software transfer model as step features and thereby provides a specification for software modeling in various fields; such specification has advantages including generality and convenience; the software models constructed through the present invention is executable, has a clear structure, adjustable hierarchies, and controllable granularities for modeling; this method supports both top-down analysis and bottom-up integration for modeling in various software systems. The quantity of required elements for modeling is small and the modeling method is simple, thereby even those not skilled in any modeling language nor computer programming language can easily and independently construct the software model, eliminating the tedious and unnecessary communication with and dependence on professional modelers and application developers, greatly reducing modeling time.

## Description

### TECHNICAL FIELD

The present invention relates to the technical field of software engineering, and more specifically, a software element model based univeral software modeling method to construct software model and computer program products thereof.

### TECHNICAL BACKGROUND

Nowadays, with rapidly developing information technology, softwares are playing an increasingly important role in our living and development. The object-oriented software method has become quite mature and mainstream after the function-oriented method, process-oriented method etc. However, many inadequacies for the object-oriented method has exposed as software systems become more complex and thus a model-driven method has become a pursued ideal software designing method. A core idea of the model-driven software method is in that software developers focus on constructing software models and representing knowledges as the software models and computers automatically convert the software models into executable program codes. Although the idea of the model-driven method has been proposed long before, in the industry, it is substantially present in a level of concept, slogan, and exploring even after last two decades of efforts, so that the object-oriented method still is a mainstream in actual applications. The most basic reasons for slow developing of the model-driven method is considered being lack of a method capable of supporting to simply and effectively construct software models. In fact, the software modeling is the core activity for software developing despite software methods.

In practical activities for the software modeling, users found that these software models share many common constructions where these constructions can be described by a model called the software element model. The software element model is a model describing software models; it is an abstraction of the software models and provides a set of basic elements and rules required for constructing software models, which is used as a specification for software modeling and thus plays a decisive role in the quality of the software models and the efficiency of software modeling.

Thus, study of the software element model has been a major focus. The MOF, which is proposed by OMG and is widely recognized in the industry, is systemic study on the software modeling. The MOF includes a set of four layers of model descripting mechanisms of which layer M1 is the software element model. The UML (Unified Modeling Language), which belongs to the M1 layer, is the current mainstream industry standard for object oriented visual modeling language. In fact, even though the UML clearly states that it neither is a methodology nor provide any software modeling method and is only a graphical descriptive language for descripting modeling methods to cooperate the software modeling methods, it is used as the software element model to a large extent. Unfortunately, the UML has the following drawbacks: Firstly, it lacks of the executability: although the UML states that it provides a great deal of flexibility for constructing models, the UML is substantially lacks a rigorous theoretical support for modeling, which results in that it cannot be assured that integral and consistency models are obtained by using the UML. The software model constructed by using UML is lack of executability, i.e., lack of sufficiency and consistency information by which the software model constructed by using UML is automatically converted into a software executable by computers, and thus the yielded software must be manually edited through codes in order to be executable by computers. This drawback further makes the UML only be a supplementary expression tool for software models rather than a true software element model. Secondly, it is code- oriented: although the UML states it is a model descripting language independent of specific languages and platforms, it is substantially oriented towards to expression tools by which the programmers employ object-oriented programming languages in analyzing and designing programs. Such a programmer-oriented code directing makes "paying great attention to the realization, and paying little attention to the service" have become an industry ill in the software developing. Thirdly, it is difficult to use: the UML creates a lot of concepts, relations and diagrams. Relationships among these concepts, relations, and diagrams are loose and numerous. The UML is originally designed for programmers. However, the UML's complication and disorder are not only hard for programmers to grasp, but also even more difficult for industry experts to understand, far from satisfying the needs of software modeling.

With a gradual rise of knowledge engineering, ontology element model recently is becoming a hot topic of research. Ontology is defined as an explicit specification of a conceptual model. The ontology element model effectively determines concepts commonly recognized in an industry with concepts as core elements, formal language as means of description, and formal logic as reasoning mechanisms, and gives clear definitions of the relations among these concepts. The ontology element model focuses on establishment and application of concept system and on classification, expression, and reasoning of information. The modeling primitive for the theory of the ontology element models includes concepts, relations, functions, axioms, and instances, providing a theoretical framework from the view of knowledge management: the international standard ISO /IEC19763 (interoperable element model framework MFI) provides a management specification with concept ontology and process ontology as core knowledge and information sharing specification with an ontology registration element model and a process registration element model as cores; Chinese patent filing 200610125050.8 provides an application method for WEB service oriented industry requirement modeling based on ISO/IEC 19763's ontology registration element model, process registration element model and ontology description tool Protege. From the software modeling perspective, first, the ontology element model focuses on knowledge management and information sharing rather than universal software modeling; second, ontology element model employs inexplicable formal language, which is difficult for personnel.

In all, though the model-driven method has been generally recognized as an ideal software developing method, the software element model that is easy for ordinary industry personnel to grasp, provides a universal software modeling norm, supports software modeling in all fields, and constructs executable models so that the software models are automatically converted into the executable software of the computer by an automatic code generating technology to implement the model-driven software method, currently is still lacking and in demand.

### SUMMARY OF THE INVENTION

In view of the above drawbacks of the prior art, the objective of the present invention is to provide a software element model based univeral software modeling method to construct software model, by which the constructing of the software model is accomplished with a software hierarchy model, software interface models, software interaction models, software algorithm models, software process models, and software transfer models as step elements, after determining basic constituents of the software element model; the software models in various specific fields are constructed by using basic molds in interdisciplinary fields; and a universal software modeling specification easily understood and grasped by those skilled in this art is provided for modeling activities in various fields.

The objective of the present invention is achieved by the following means.

A software element model based univeral software modeling method to construct software model, by means of a computer readable storage medium having a computer readable program code stored therein, the computer readable program code containing instructions executable by a processor of a computer software to implement a method of constructing software model by processing data conforming to the software element model and describing the software model, the software model describing a software system, the software element model comprising:
a software hierarchy mold which describes the software hierarchy model of the software model in a tree structure whose nodes are software component classes and which is used as a template to be configured in an actual software modeling environment to form the software hierarchy model of the software model, wherein the software hierarchy model refers to the hierarchy relationships constituted by the software component classes as the nodes in the software model, wherein the software component class refers to a set of software component instances with the same external features, and wherein the tree structure, whose nodes are the software component classes, is referred as a hierarchy tree;
a software interface mold which describes software interface models by an optional structure of an attribute set, a function set, and an event set, the software interface mold is used as a template in the actual software modeling environment to be configured to form the software interface models, wherein the software interface models refer to external features of the software component classes, wherein the functions in the function set include software interaction functions, software algorithm functions, and software process functions, wherein the software interaction function is implemented by a software interaction model, wherein the software algorithm function is implemented by a software algorithm model, and wherein the software process function is implemented by a combination of software process models and software transfer models;
a software interaction module which describes the software interaction models by a tree structure whose nodes are interaction elements and which is used as a template in the actual software modeling environment to be configured to form the software interaction models, wherein the software interaction model refers to a description of a way for implementing the software interaction function with a combination of the interaction elements and the interaction element refers to a functional element for interacting information with the actual software modeling environment;
a software algorithm mold which describes software algorithm models by a tree structure whose nodes are operators and which is used as a template in the actual software modeling environment to be configured to form the software algorithm model, wherein the software algorithm model refers to a description of the algorithm which implements the software algorithm function by using the combination of operators, and wherein the operator refers to a component with a previously realized specific function;
a software process mold which describes software process models by combining actions as nodes and which is used as a template in the actual software modeling environment to configure the software process models, wherein the software process model refers to a description of a way of the software process function which is implemented using a combination of the actions and wherein the action refers to an execution of a function;
a software transfer mold which describes software transfer models by a transfer set and which is used as a template in the actual software modeling environment to be configured to form the software transfer models, wherein the software transfer model refers to transfer relationships of the data of involved actions and a transfer in the transfer set is a transfer relationship of the data between one attribute and another attribute;
specific steps to construct the software model described by the six molds are as follows:
   1) constructing the software hierarchy model: the software hierarchy mold reading in software hierarchy model commands from the actual software modeling environment, wherein the software hierarchy model command refers to command such as creating a software component class, adding a software component class, selecting a software component class, naming a software component class, or deleting a software component class for the hierarchy tree and wherein the software hierarchy mold performs corresponding operations on the software component class nodes in response to the software hierarchy model commands to obtain the software hierarchy model;
   2) constructing the software interface models: constructing the software interface model for each software component class of the software hierarchy model obtained in the step 1), the steps for constructing each software interface model including: the software interface mold reading in software interface model commands from the actual software modeling environment, wherein the software interface model command refers to command such as creating, naming, or deleting the attributes, the functions, and the events, wherein the software interface mold performs corresponding operations in response to the software interface model commands to obtain the software interface model, and wherein the software interaction models for implementing software interaction functions are constructed by step 3), wherein the software algorithm models for implementing software algorithm functions are constructed by step 4), and wherein the software process models for implementing software process functions are constructed by the step 5);
   3) constructing the software interactive models: constructing the software interaction model for each software interaction function obtained in the step 2), steps for constructing each software interaction model including: the software interaction mold reading in software interaction model commands from the actual software modeling environment;
   4) constructing the software algorithm models: constructing the software algorithm model for each software algorithm function obtained in the step 2), the steps for constructing each software algorithm model including: the softweare algorithm mold reading in software algorithm model commands from the actual software modeling environment;
   5) constructing the software process models: constructing the software process model for each software process function obtained in the step 2), the steps for constructing each software process model including: the software process mold reading in software process model commands from the actual software modeling environment; and
   6) constructing the software transfer models: constructing the software transfer model for each action in the software process models obtained in the step 5), the steps for constructing each software transfer model including: the software transfer mold reading in software transfer model commands from the actual software modeling environment, wherein the software transfer model command refers to the command such as adding a transfer, adding a transfer, or deleting a transfer and wherein the software transfer mold performs corresponding operations in response to the software transfer model commands to obtain the software transfer model.

Thereby, the software model constructed by the software hierarchy model, the software interface models, the software algorithm models, the software process models, and the software transfer models is accomplished.

The software element model applies the following modeling rules:
a combination of the software process mold and the software transfer mold provide a universal means to describe and configure functions; the software interaction mold provides a simplified alternative for replacing the combination of the software process mold and the software transfer mold if only interaction elements are used to implement the functions;
a combination of the software process mold and the software transfer mold provide a universal means to describe and configure functions; the software algorithm mold provides a simplified alternative for replacing the combination of the software process mold and the software transfer mold if only operators are used to implement the functions;
the software element model employs a parent-child structure as a base recursive unit to recursively describe the software model; the parent-child structure refers to a structure of parent-child relationships in a hierarchy tree, constituted by an involved software component class and all child software component classes thereof;
the specific function of the step 2) can only be any one of the software interaction function, the software algorithm function, and software process function;
the software interaction model commands for constructing the software interaction model in the step 3) refer to commands, such as adding an interaction element, selecting an interaction element, naming an interaction element, and deleting an interaction element, and the software interaction mold performs corresponding operations in response to the software interaction model commands to obtain the software interaction model; the interaction elements include operator interaction elements and component interaction elements; the operator interaction element refers to a component with a previously realized specific function and the component interaction element refers to one execution of the interaction function in a set of the interaction functions in the parent-child structure, the set of the interaction functions in the parent-child structure refers to a collection constituted by all interaction functions of the involved component class and all interaction functions of all child component classes thereof in the parent-child structure, the tree structure of which the nodes are the interaction elements is referred to as an interaction tree, the software interaction molds include specific forms of, for example, interface molds, file molds, database molds, and communicating molds; and the software interaction models include specific forms of interface models, file models, database models, and communicating models;
the software algorithm model commands for constructing the software algorithm model in the step 4) refer to commands, such as adding an operator, selecting an operator, naming an operator, and deleting an operator, as well as adding an assignment, selecting an assignment, and deleting an assignment, and the software algorithm mold performs corresponding operations in response to the software algorithm model commands to obtain the software algorithm model; the operators include logic operators with logic functions and computation operators with calculation functions; the tree structure whose nodes are operators is referred to as an algorithm tree; the assignment refers to an assignment relationship between two attributes in a set of the algorithm attributes; and the set of the algorithm attributes refers to a collection constituted by a set of attributes of the involved software component classes, a set of attributes of all operators, and a set of attributes of all interaction elements in the software interaction model;
the software process model commands for constructing the software process model in step 5) refer to commands such as adding an action, selecting an action, naming an action, and deleting an action and the software process mold performs a corresponding operation in response to the software process model commands to obtain the software process model; the actions include both component actions and operator actions; the component action refers to one execution of the functions in the function set in the parent-child structure, the function set in the parent-child structure refers to a collection constituted by the function set of the involved software component class and function sets of all child software component classes in the parent-child structure; the operator action refers to one execution of operator's function; the software process models include attribute process models and event process models, the software process mold includes attribute process mold and event process mold, and the attribute process mold describes an attribute process model through a process tree as the structure, which is a tree structure constituted by actions as nodes; the event process mold describes an event process model by a set of event associations as the structure; the event association in the set of event associations is an association relationship between an event in a set of events in a parent-child structure and an operator action or a component action; the event set in the parent-child structure is a collection constituted by the event set of the involved software component class and the event sets of all interaction elements in the interaction model thereof and the event sets of all child software component classes and the event sets of all interaction elements in the interaction model thereof, in the parent-child structure.

Besides action attributes which refers to the attribute of the component class where the action is, the attributes relevant to transfers are limited to the parent-child attribute set, which refers to a collection constituted by the attribute set of the involved software component classes and attribute sets of all child software component classes thereof in the parent-child structure.

Alternatively, the attribute sets in the parent-child structure may include the attribute sets of all interaction elements in the interaction models of the involved software component class and the attribute sets of all interaction elements in the interaction models of all child software component classes in the parent-child structure.

Thus, after determining basic constituents of the software element model, the present invention constructs software models through the software hierarchy model, the software interface models, software interaction models, the software algorithm models, the software process models, and the software transfer models as step features and thereby provides a specification for software modeling in various fields; such specification has advantages including generality and convenience; the software models constructed through the present invention are executable, have clear structures, adjustable hierarchies, and controllable granularities; this modeling method supports both top-down analysis and bottom-up integration for modeling in various software system modeling; the quantity of required elements for modeling is small and the modeling method is simple, thereby even those not skilled in any modeling language nor computer programming language can easily and independently construct the software model, eliminating the tedious and unnecessary communication with and dependence on professional modelers and application developers, greatly reducing modeling time.

In summary, the present invention has obvious advantages over the prior art as follows:
(1) executability: the software model constructed according to the present invention is executable, that is, has an integrity and a full consistency in which the software model can be mapped to a program executable by a computer;
(2) generality: the software model constructed according to the present invention has a clear structure, adjustable hierarchies, controllable granularities, and generality suitable for all types of systems. That is, not only suitable for software algorithm modeling but also rapid prototyping of the system and even more suitable for large, complex software modeling; not only convenient for top-down analysis but also bottom up integration; not only suitable for software integration based on prefabricated units and software expansion based on customized units, but also suitable for distributed software interconnection and communication; not only suitable for practical engineering software modeling, but also suitable for various information software modeling; not only suitable for equipment information software simulation modeling, but also suitable for MIS (management information software) modeling; not only suitable for desktop software modeling, embedded device software modeling, mobile terminal software modeling, but also suitable for LAN software modeling, WAN software modeling, and cloud computation environmental software modeling; not only suitable for applied software modeling, but also suitable for software development environment modeling; and
(3) ease of use: the elements of the present invention are concise, rules thereof are simple, and methods thereof are universal. Even those not skilled in any complex modeling language nor any computer programming language can easily take advantage of the present invention to construct the software model with executability in a relatively short period of time, eliminating the tedious and unnecessary communication with and dependence on professional modelers and application developers, enabling the resultant software model to be more fitted to the expectations of those skilled in this art, and eliminating possible understanding errors of the professional modelers or the application developers; at the same time, because communication time is saved, modeling time is greatly reduced.

### BRIEF DESCRIPTION OF THE DRAWINGS

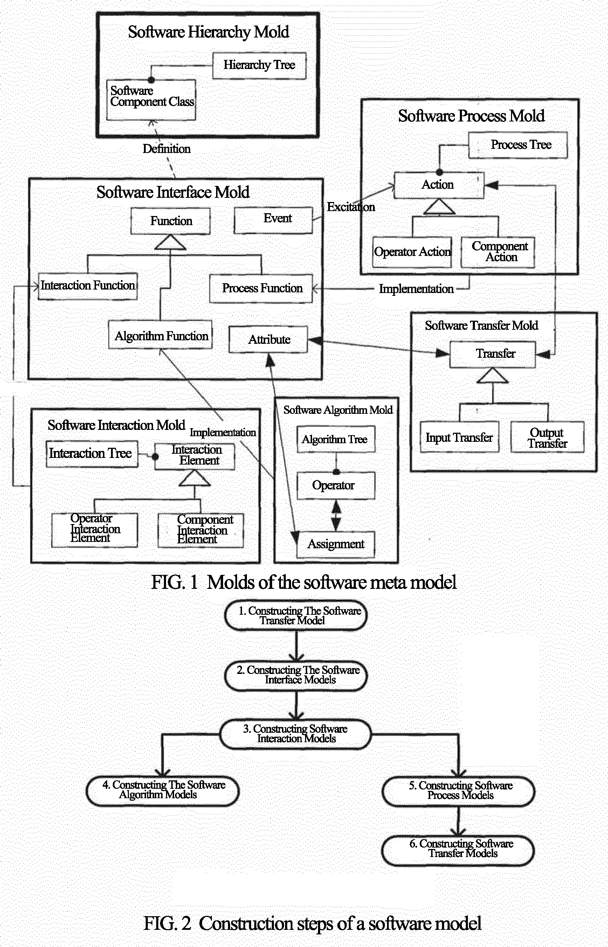

Fig. 1 is molds of the software element model.
Fig. 2 is construction steps of a software model.

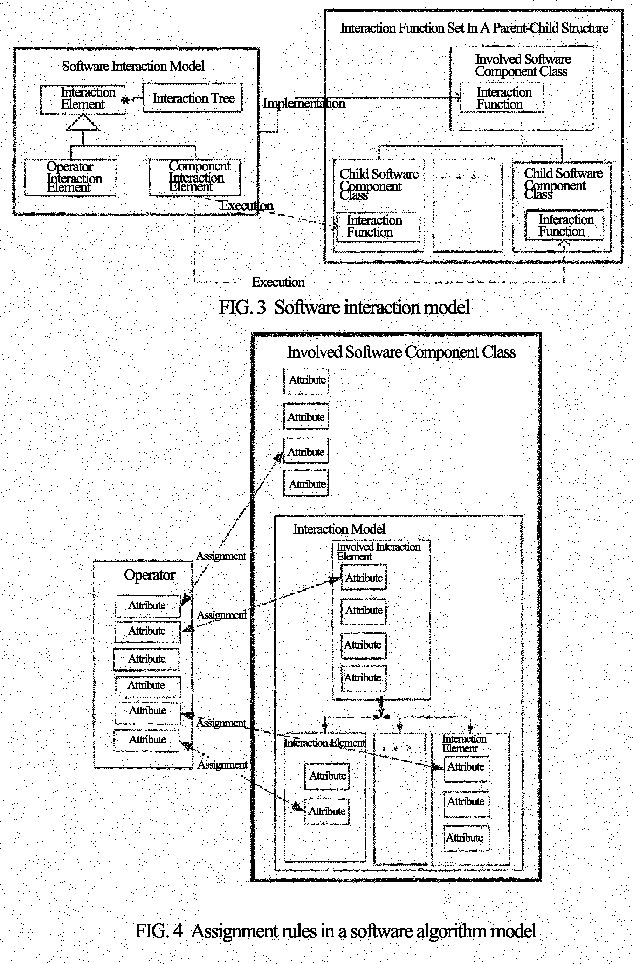

Fig. 3 is a software interaction model.
Fig. 4 is assignment rules in a software algorithm model.

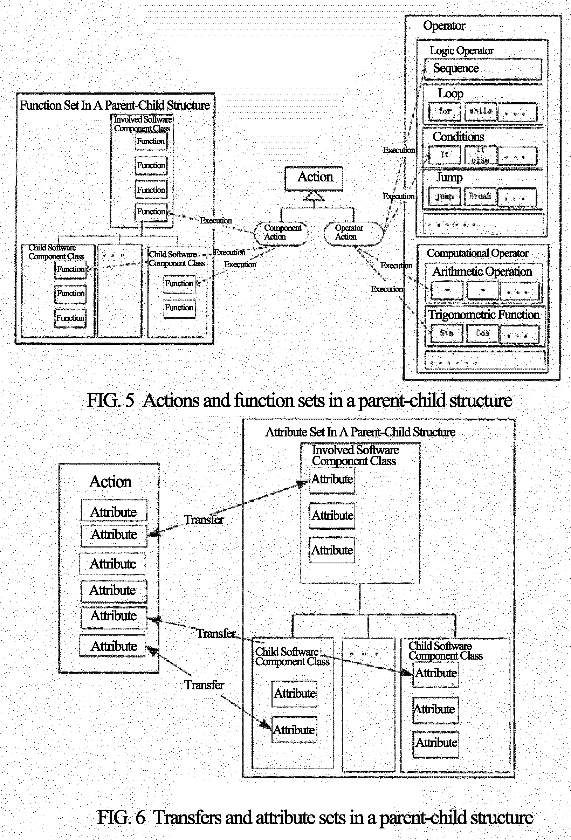

Fig. 5 is actions and function sets in a parent-child structure.
Fig. 6 is transfers and attribute sets in a parent-child structure.
Fig. 7 is a block diagram of a computer for implementing software element model based univeral software modeling method to construct software model.
Fig. 8 is the business management YWGL hierarchy model.
Fig. 9 is the business management YWGL interface model.
Fig. 10 is the sales management XSGL interface model.
Fig. 11 is the production management SCGL interface model.
Fig. 12 is the purchase management CGGL interface model.
Fig. 13 is the business assistant YWZS interface model.
Fig. 14 is the distributed sales product FXP interface model.
Fig. 15 is the direct sales product ZXP interface model.
Fig. 16 is the main parts ZJ interface model.
Fig. 17 is the auxiliary parts LJ interface model.
Fig. 18 is the finished product CP interface model.
Fig. 19 is the business display interaction model.
Fig. 20 is the sales display interaction model.
Fig. 21 is the production display interaction model.
Fig. 22 is the purchase display interaction model.
Fig. 23 is the distributed sales display interaction model.
Fig. 24 is the direct sales display interaction model.
Fig. 25 is the main parts display interaction model.
Fig. 26 is the auxiliary parts display interaction model.
Fig. 27 is the finished product display interaction model.
Fig. 28 is the product type configuration algorithm model.
Fig. 29 is the sales update algorithm model.
Fig. 30 is the production delivery algorithm model.
Fig. 31 is the production update algorithm model.
Fig. 32 is the purchase implementation algorithm model.
Fig. 33 is the purchase update algorithm model.
Fig. 34 is the distributed sales update algorithm model.
Fig. 35 is the direct sales update algorithm model.
Fig. 36 is the main parts update algorithm model.
Fig. 37 is the auxiliary parts update algorithm model.
Fig. 38 is the finished product update algorithm model.
Fig. 39 is the main parts processing algorithm model.
Fig. 40 is the main parts delivery algorithm model.
Fig. 41 is the auxiliary parts processing algorithm model.
Fig. 42 is the auxiliary parts delivery algorithm model.
Fig. 43 is the auxiliary parts receipt algorithm model.
Fig. 44 is the finished product assembly algorithm model.
Fig. 45 is the main business procedure process model.
Fig. 46 is the configuration display and control process model.
Fig. 47 is the business configuration process model.
Fig. 48 is the business instance creation process model.
Fig. 49 is the business instance configuration process model.
Fig. 50 is the business operation process model.
Fig. 51 is the operation display and control process model.
Fig. 52 is the sales display and control process model.
Fig. 53 is the sales operation process model.
Fig. 54 is the production display and control process model.
Fig. 55 is the production operation process model.
Fig. 56 is the production planning process model.
Fig. 57 is the production implementation process model.
Fig. 58 is the purchase display and control process model.
Fig. 59 is the purchase operation process model.
Fig. 60 is the distributed sales display and control process model.
Fig. 61 is the direct sales display and control process model.
Fig. 62 is the main procedure frame loop transfer model.
Fig. 63 is the main procedure condition transfer model.
Fig. 64 is the business operation state negation transfer model.
Fig. 65 is the sales instance creation transfer model.
Fig. 66 is the production instance creation transfer model.
Fig. 67 is the purchase instance creation transfer model.
Fig. 68 is the production configuration traversal transfer model.
Fig. 69 is the production serial number increment transfer model.
Fig. 70 is the production serial number assignment transfer model.
Fig. 71 is the purchase configuration traversal transfer model.
Fig. 72 is the purchase serial number assignment transfer model.
Fig. 73 is the sales serial number reset transfer model.
Fig. 74 is the sales configuration traversal transfer model.
Fig. 75 is the sales serial number assignment transfer model.
Fig. 76 is the sales-production configuration comparison transfer model.
Fig. 77 is the sales-production configuration condition transfer model.
Fig. 78 is the sales-production product name assignment transfer model.
Fig. 79 is the sales-purchase configuration comparison transfer model.
Fig. 80 is the sales-purchase configuration condition transfer model.
Fig. 81 is the sales-purchase product name assignment transfer model.
Fig. 82 is the sales-production operation transfer model.
Fig. 83 is the sales-purchase operation transfer model.
Fig. 84 is the sales receipt transfer model.
Fig. 85 is the shipment quantity summary transfer model.
Fig. 86 is the total shipment quantity summary transfer model.
Fig. 87 is the inventory quantity summary transfer model.
Fig. 88 is the contract quantity summary transfer model.
Fig. 89 is the demand quantity summary transfer model.
Fig. 90 is the order quantity summary transfer model.
Fig. 91 is the main-parts pending processing quantity summary transfer model.
Fig. 92 is the auxiliary parts pending processing quantity summary transfer model.
Fig. 93 is the parts receipt transfer model.
Fig. 94 is the finished product assembly transfer model.

In the drawings listed above, the figure showing transfer model emphasized the involved action's transfer model using boldface font. Meanwhile, for the convenience of describing reading, the non-boldface figures in the drawings represent information regarding involved actions.

### DETAILED DESCRIPTION OF THE INVENTION

Generally, a computer comprises a central processor, a memory, an Input and Output (I/O) interface, and a bus; and furthermore, the computer is connected with an input and output device and a storage medium. The central processor takes charge of functions of computing and controlling the computer. The central processor may only include one central processing unit, or may include a plurality of central processing units distributed at one or more positions.

The memory medium may be formed by any known computer readable storage medium. For example, a buffer memory may temporarily store some program codes so as to reduce time for extracting codes from a large-capacity memory when the program is run. In the meantime, the memory may reside at a certain physical position, and may be stored in one or more types of data, or may be distributed in different physical systems in different forms. Moreover, the memory may also be distributed in a Local Area Network (LAN) or a Wide Area Network (WAN). The memory may contain program codes for implementing a general modeling method to establish a system view based on a system element view, or may contain other codes not shown in the diagram, such as an operating system.

The input and output interface allows the computer to exchange information with the storage medium or another computer. The input and output device contains any known external device type, such as a display device, a keyboard, a mouse, a printer, a sound box, a handheld device, and a facial mask, etc. The bus provides communication connection among respective component parts inside the computer, including a variety of transmission connection forms such as electrical, optical, wireless and other forms. The storage medium includes any known computer readable storage medium, such as a magnetic disc, an optical disc, etc. The storage medium may contain one or more examples of a general system view established by the system element view.

A person skilled in the art can know that the present invention can be implemented as an all hardware product, an all software product, or a combination of hardware and software, which is commonly referred to as a module. Moreover, the present invention can be implemented by a computer program product stored in the computer readable medium. The computer readable medium may be, for example, but not limited to an electrical, a magnetic, an optical, an electromagnetic, an infrared or a semiconductor system, apparatus, or device or any combination of the above, and more particularly, the computer readable medium includes, but not limited to, the following: a random access memory (RAM), a read-only memory (ROM), an erasable and programmable read-only memory (EPROM or flash memory), a CD-ROM, an optical storage device, a magnetic storage device, and any combination of the above.

The computer program codes for implementing the method of the present invention can be programmed by one or more programming languages, including, for example, Java, Small, C++, C# and so on, and other process-oriented programming languages such as C. The program codes can be run on a personal computer, a handheld device, or an LAN or WAN.

A person skilled in the art surely knows that the method of the present invention may also be expressed by graphical representations, and such graphical representations all can be implemented as computer program codes, which can be processed by a general-purpose computer, a special-purpose computer and other programmable data processing apparatuses, to achieve the functions indicated by these graphical representations.

In the following embodiments, in order to maintain the completeness of description of a software model, the transfer models for all actions are listed. Among these, some of the actions do not require transfers of the data, and thereby the content of such a transfer model is null which will be expressed as the word "null".

Below, a further detailed description of the present invention will be given in conjunction with a specific embodiment in which constructing a business management YWGL software model by using the present invention is demonstrated. It should be known by those skilled in this art that the technical scope of the present invention is not limited to the following demonstrated contents of this embodiment.

### Embodiment: constructing the business management YWGL software model

The present embodiment supposes that the firm's business mode is to profit from selling its own products and outsourcing products and models the business management software for achieving the following business management intentions:
(1) clearly distinguishing three modules: production management, purchase management, and sales management;
(2) configuration: configuring produced product type quantities and purchased product type quantities by an interface and configuring sales product type quantities from the produced product type quantities and the purchased product type quantities; and
(3) execution function: the sales management module real-time interacts with an actual application environment for contract order quantities and shipment quantities of the direct sales and distributed sales of each type of products, receives delivery information from the production management module and the purchase management module, and issues order information to the production management module and the purchase management module based on the sales status; the production management module and the purchase management module receive order information from the sales management module, receive response order information after completed information from the actual application environment, start an internal process, and submit the delivery information to the sales management module. Each module real-time displays information by an interface.

The detailed procedure for constructing this embodiment's software model is given below.

### Constructing the software hierarchy model

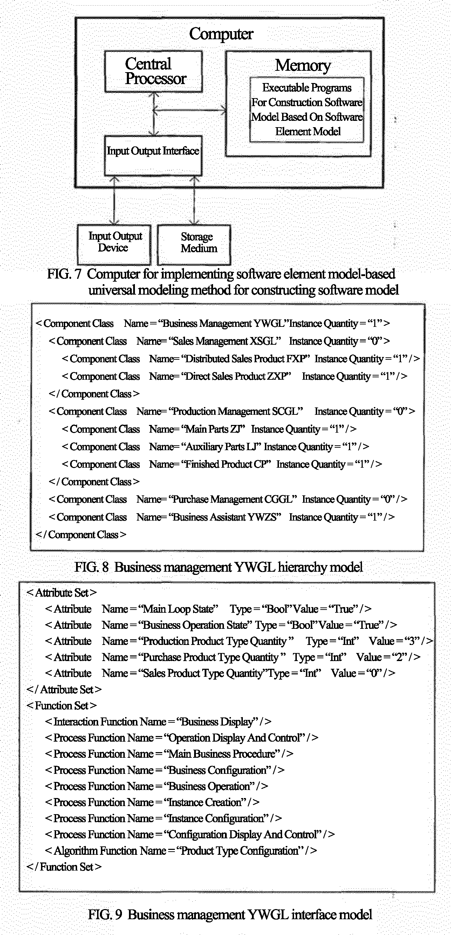

Firstly, for the convenience of describing understanding, Fig. 8 shows a completed software hierarchy model of the business management YWGL software model.

At the initial state before start of modeling, the software hierarchy mold creates a root node for a hierarchy tree, wherein the software component class of the root node is referred to as a root software component class;
the software hierarchy mold receives the command to select root software component class from the actual software modeling environment and sets the root software component class to the involved software component class in response to the foregoing command; the software hierarchy mold receives the command to modify software component class' name to "business management YWGL" from the actual software modeling environment and modifies the name of the root software component class to "business management YWGL" in response to the foregoing command; the involved software component class is referred to as a business management YWGL software component class in accordance with the name of the root software component class and name for the other software component classes may be deduced by analogy, which will not be repeated below; the software hierarchy mold receives the command to set the component instance quantity to 1 from the actual software modeling environment and sets the component instance quantity of the business management YWGL software component class to 1 in response to the foregoing command;
the software hierarchy mold receives the command to add a child software component class from the actual software modeling environment and adds a child software component class for business management YWGL software component class in response to the foregoing command; the software hierarchy mold sets the foregoing child software component class to the involved software component class; the software hierarchy mold receives commands, from the actual software modeling environment, to modify the name of the involved software component class to "sales management XSGL" and modifies the name of the involved software component class to "sales management XSGL" in response to the foregoing commands;
in the foregoing steps, the software hierarchy mold receives the command from the actual software modeling environment to select the business management YWGL software component class and adds, in response to the foregoing command, three child software component classes, i.e., a production management SCGL software component class whose software component instance quantity is 0, a purchase management CGGL software component class whose software component instance quantity is 0, and a business assistant YWZS software component class whose software component instance quantity is 1, to the business management YWGL software component class:
in the foregoing steps, the software hierarchy mold receives the command to select the sales management XSGL software component class from the actual software modeling environment and add, in response to the foregoing command, two child software component classes, i.e., distributed sales product FXP software component class and direct sales product ZXP software component class, whose software component instance quantities are 1, to the sales management XSGL software component class; and
in the foregoing steps, the software hierarchy mold receives the command to select the production management SCGL software component class from the actual software modeling environment and adds, in response to the foregoing command, three child software component classes, i.e., main parts ZJ software component class whose instance quantity is 1, auxiliary parts LJ software component class whose instance quantity is 1, and finished product CP software component class whose instance quantity is 1, to the production management SCGL software component class.

So far, the software hierarchy model of the business management YWGL software model is accomplished.

### Constructing the software interface models

Next, the procedure for constructing the software interface model for each of the software component classes in the software hierarchy model as described above will be given. The software interaction in this embodiment is demonstrated with interface displays as examples and thus it should be appreciated by those skilled in this art that the software interactions in other forms can be similarly handled by taking advantage of the present invention.

### Business management YWGL software interface model

Fig. 9 shows a completed software interface model for business management YWGL software component class, which is shortly referred to as the business management YWGL software interface model, names of other software interface models of the software component classes may be deduced by analogy; the procedure for constructing business management YWGL software interface model is as follows:
the software hierarchy mold receives the command to select the business management YWGL software component class from the actual software modeling environment and sets the business management YWGL software component class to the involved software component class in response to the foregoing command;
the software interface mold receives the command to add an attribute from the actual software modeling environment and adds a new attribute to the business management YWGL software component class in response to the foregoing command; the software interface mold sets the foregoing new attribute to the involved attribute; the software interface mold receives the command to modify the data type of the involved attribute as "bool" from the actual software modeling environment and modifies the data type of the involved attribute to "bool"; the software interface mold receives the command to modify the attribute name of the involved attribute to the word "main loop state" from the actual software modeling environment and modifies the attribute name of the involved attribute to the main loop state in response to the foregoing command; the attribute whose attribute name is the main loop state is shortly referred to as the main loop state attribute, and names for the subsequent attributes may be deduced by analogy, which will not be repeated below; and the software interface mold receives the command to set the attribute value of the involved attribute to "true" from the actual software modeling environment and sets the attribute value of the main loop state attribute to "true" in response to the foregoing command;
in the foregoing steps, the software interface mold adds the following attributes to the business management YWGL interface model: a business operation state attribute whose data type is the "bool" type and the attribute value is the "true"; a production product type quantity attribute whose data type is the integer and the attribute value is 3; a purchase product type quantity attribute whose data type is the integer and the attribute value is 2; a sales product type quantity attribute whose data type is the integer and the attribute value is 0;
the software interface mold receives the command to add a function from the actual software modeling environment and adds a software interaction function to the business management YWGL software component class in response to the foregoing command; the software interface mold sets the newly added software interaction function to the involved function; the software interface mold receives the command to modify the function name of the involved function to the word "business display" from the actual software modeling environment and modifies the function name of the involved function to the business display in response to the foregoing command, wherein such a function whose function name is referred to as a business display is shortly referred to as the business display interaction function, short names for the subsequent functions may be deduced by analogy, which will not be repeated below; and
in the foregoing steps, the software interface mold adds the following software process functions to the business management YWGL interface model: an operation display and control process function, a main business procedure (which is the entry function of the software model) process, a business configuration process function, a business operation process function, an instance creation process function, an instance configuration process function, a configuration display and control process function, and a product type configuration process function.

So far, the business management YWGL interface model is accomplished.

### Sales management XSGL interface model

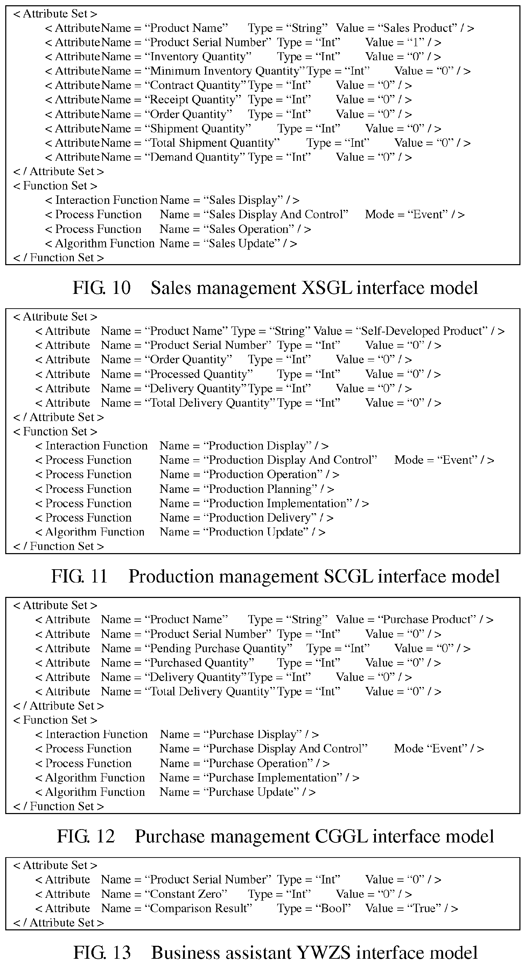

Fig. 10 shows a completed sales management XSGL interface model whose construction process is similar to that of the "business management YWGL interface model" and the content thereof is as follows:
the attribute set contains: a product name attribute whose data type is "string" and attribute value is "sales product"; a product serial number attribute whose data type is "int" and attribute value is "1"; an inventory quantity attribute whose data type is "int" and attribute value is "0"; a minimum inventory quantity attribute whose data type is "int" and attribute value is "0"; a contract order quantity attribute whose data type is "int" and attribute value is "0"; a receipt quantity attribute whose data type is "int" and attribute value is "0"; an order quantity attribute whose data type is "int" and attribute value is "0"; a shipment quantity attribute whose data type is "int" and attribute value is "0"; a total shipment quantity attribute whose data type is "int" and attribute value is "0"; and a demand quantity attribute whose data type is "int" and attribute value is "0"; and
the function set contains three process functions: an internal order process function, a sales shipment process function, and a sales order process function.

### Production management SCGL interface model

Fig. 11 shows a completed production management SCGL interface model whose construction process is similar to that of "business management YWGL interface model" and the content thereof is as follows:
the attribute set contains: a product name attribute whose data type is "string" and attribute value is "self-developed product"; a product serial number attribute whose data type is "int" and attribute value is "1"; an order quantity attribute whose data type is "int" and attribute value is "0"; a processed quantity attribute whose data type is "int" and attribute value is "0"; a delivery quantity attribute whose data type is "int" and attribute value is "0"; and a total delivery quantity attribute whose data type is "int"and attribute value is "0"; and
the function set contains three process functions: a production planning process function, a production implementation process function, and a production delivery process function.

### Purchase management CGGL interface model

Fig. 12 shows a completed purchase management CGGL interface model whose construction process is similar to that of "business management YWGL interface model" and the content thereof is as follows:
the attribute set contains: a product name attribute whose data type is "string" and attribute value is "purchased product"; a product serial number attribute whose data type is "int" and attribute value is "1"; a pending purchase quantity attribute whose data type is "int" and attribute value is "0"; a purchased quantity attribute whose data type is "int" and attribute value is "0"; a delivery quantity attribute whose data type is "int" and attribute value is 0; and a total delivery quantity attribute whose data type is "int" and attribute value is "0" the; and
the function set contains two algorithm functions, i.e., a purchase implementation algorithm function and a purchase delivery algorithm function.

### Business assistant YWZS interface model

Fig. 13 is the accomplished business assistant YWZS interface model whose construction procedure is similar to that of the "business management YWGL interface model" and the content thereof is as follows:
the attribute set contains: a product serial number attribute whose data type is the integer and the attribute value is 0; a constant zero attribute whose data type is the integer and the attribute value is 0; and a comparison result attribute whose data type is the "bool" type and the attribute value is "true".

### Distributed sales product FXP interface model

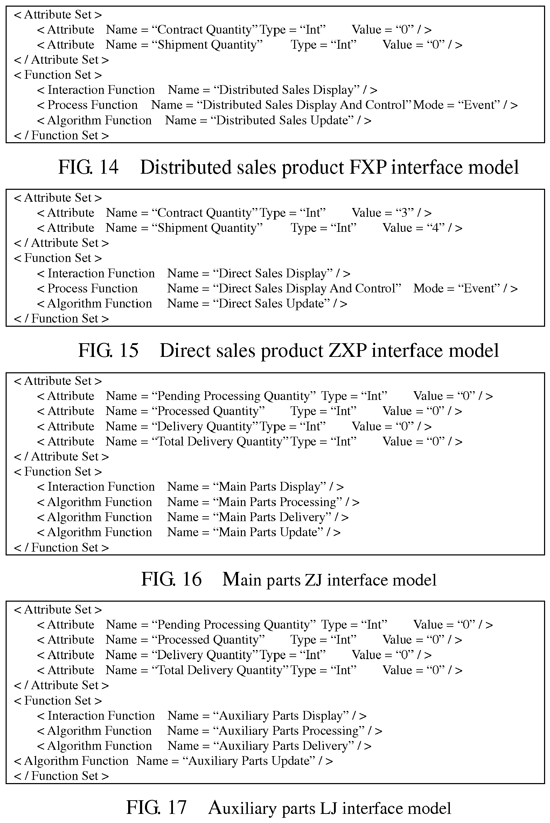

Fig. 14 shows a completed distributed sales product FXP interface model whose construction procedure is similar to that of "business management YWGL interface model" and the content thereof is as follows:
the attribute set contains: a minimum inventory quantity attribute whose data type is "int" and attribute value is "5"; a contract order quantity attribute whose data type is "int" and attribute value is "12"; and a shipment quantity attribute whose data type is "int" and attribute value is "8".

### Direct sales product ZXP interface model

Fig. 15 shows a completed direct sales product ZXP interface model whose construction procedure is similar to that of "business management YWGL interface model" and the content thereof is as follows:
the attribute set contains: a minimum inventory quantity attribute whose data type is "int" and attribute value is "6"; a contract order quantity attribute whose data type is "int" and attribute value is "3"; and a shipment quantity attribute whose data type is "int" and attribute value is "4".

### Main parts ZJ interface model

Fig. 16 shows a completed main parts ZJ interface model whose construction procedure is similar to that of "business management YWGL interface model" and the content thereof is as follows:
the attribute set contains: a main parts name attribute whose data type is "string" and attribute value is "main parts"; a pending processing quantity attribute whose data type is "int"and attribute value is "0"; a processed quantity attribute whose data type is "int"and attribute value is "0"; a delivery quantity attribute whose data type is "int"and attribute value is "0"; and a total delivery quantity attribute whose data type is "int" and attribute value is "0"; and
the function set contains two algorithm functions: a main parts processing algorithm function and a main parts delivery algorithm function.

### auxiliary parts LJ interface model

Fig. 17 shows a completed auxiliary parts LJ interface model whose construction procedure is similar to that of "business management YWGL interface model" and the content thereof is as follows:
the attribute set contains: an auxiliary parts name attribute whose data type is "string" and attribute value is "auxiliary parts"; a pending processing quantity attribute whose data type is "int"and attribute value is "0"; a processed quantity whose data type is "int" and attribute value is "0"; a delivery quantity attribute whose data type is "int" and attribute value is "0"; and a total delivery quantity attribute whose data type is "int" and attribute value is "0"; and
the function set contains a software interaction function, i.e., an auxiliary parts display algorithm function, and three algorithm functions: an auxiliary parts processing function, an auxiliary parts delivery algorithm function, and an auxiliary parts update algorithm function.

### Finished product CP interface model

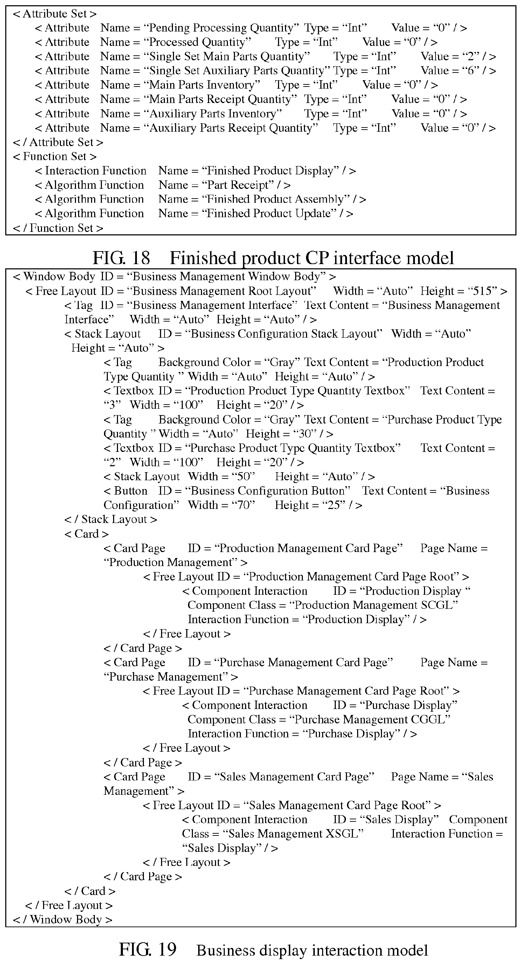

Fig. 18 shows a completed finished product CP interface model whose construction procedure is similar that of "business management YWGL interface model" and the content thereof is as follows:
the attribute set contains: a finished product name attribute whose data type is "string" and attribute value is "finished product"; a pending processing quantity attribute whose data type is "int" and attribute value is "0", a processed quantity attribute whose data type is "int"and attribute value is "0"; a single set main parts quantity attribute whose data type is "int" and attribute value is "2"; a single set auxiliary parts quantity attribute whose data type is "int"and attribute value is "6"; a main parts inventory quantity attribute whose data type is "int" and attribute value is "0"; a main parts receipt quantity attribute whose data type is "int" and attribute value is "0"; a parts inventory quantity attribute whose data type is "int" and attribute value is "0"; and a parts receipt quantity attribute whose data type is "int" and attribute value is "0"; and
the function set contains a product display software interaction function and three algorithm functions: a parts receipt algorithm function, a finished product assembly algorithm function, and a finished product update algorithm function.

### Constructing the software interaction models

Next, the construction procedure of each of the software interaction models will be described in detail.

### Business display software interaction model

Fig. 19 shows the accomplished software interaction model for implementing the business display functions in the business management YWGL interface model, which is shortly referred to as the business display interaction model. Short names of the software interaction models in the other interface models may be deduced by analogy, which will not be repeated below. The construction procedure of the business display interaction model is as follows:
the software interface mold receives and responds to the command from the actual software modeling environment to set the business display interaction function of the business management YWGL software component class to the involved function;
the software interaction mold receives and responds to the command from the actual software modeling environment to successively accomplish the following operations: creating a window element shortly referred to as a business management window element and a free layout element as a root interaction element of the business management window element, which is referred to as a root layout element of the business management;
in the foregoing steps, adding a tag element as a child interaction element for the root layout element of the business management and setting a text content attribute of the involved tag element as the word "business management interface", wherein the tag element is referred to as a business management interface tag element for the convenience for the description and names for other elements may be deduced by analogy, which will not be repeated below;
the software interaction mold receives and responds to the command from the actual software modeling environment to add a stack layout element, shortly referred to as a business configuration stack layout element, for the business management root layout element; the software interaction mold receives and responds to the command from the actual software modeling environment to add the following operator interaction elements as child interaction elements thereof: adding a tag element whose background color is set to gray and the text is "production product type quantity "; adding a textbox element whose text content is set to 3, shortly referred to as a production product type quantity textbox element; adding a tag element whose background color is set to gray and the text is "purchase product type quantity "; add a textbox element whose text is set to 2, shortly referred to as a purchase product type quantity textbox element; adding a stack layout element whose width value is set to 50; adding a button element whose text content attribute is set to "business configuration", shortly referred to as a business configuration button element;
the software interaction mold receives and responds to the command from the actual software modeling environment to add a card element composed of three card pages for the business management root layout element;
in the foregoing steps, selecting from the card elements a first card page shortly referred to as a production management card page, whose page name is changed into "production management"; adding, as a root interaction element of the production management card page, a free layout element which is shortly referred to as the production management card page root interaction element; adding a component interaction element based on the production display interaction function of the production management SCGL software component class as a child interaction element of the production management card page root interaction element;
in the foregoing steps, selecting from the card elements a second card page shortly referred to as a production management card page for the convenience for the description, whose page name is changed into "purchase management"; adding, as a root interaction element of the purchase management card page, a free layout element which is shortly referred to as the purchase management card page root interaction element for the convenience for the description; adding a component interaction element based on the purchase display function of the purchase management CGGL software component class as a child interaction element of the purchase management card page root interaction element;
in the foregoing steps, selecting from the card element a third card page shortly referred to as a sales management card page for the convenience for the description, whose page name is changed into "sales management"; adding, as a root interaction element of the sales management card page, a free layout element which is shortly referred to as the sales management card page root interaction element the convenience for the description; adding a component interaction element based on the sales display interaction function of the sales management XSGL software component class as a child interaction element of the sales management card page root interaction element.

So far, the business display interaction model is accomplished.

### Sales display interaction model

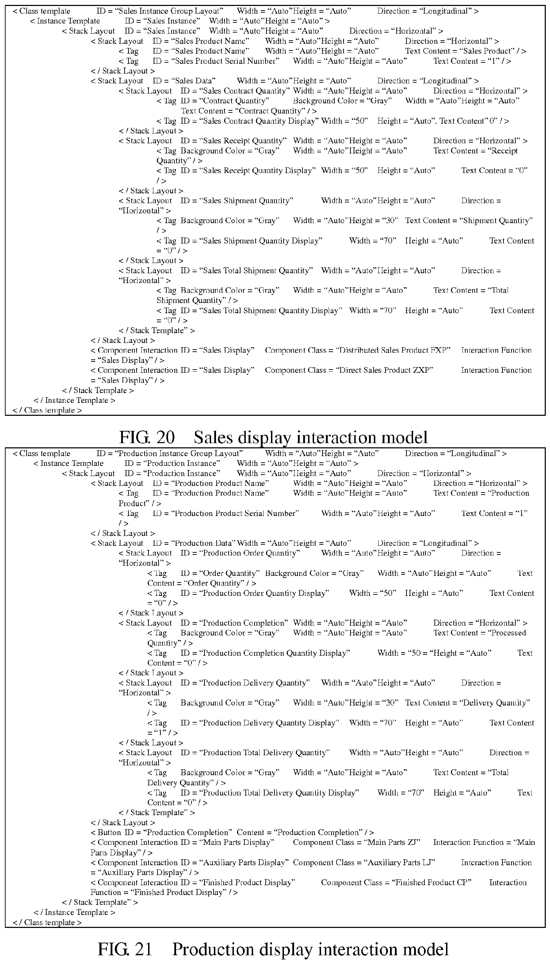

As shown in Fig. 20, , the construction procedure of the sales display interaction model is similar to that of "business display interaction model" and the content thereof is as follows:
creating, as a template of the sales display interaction model, a type template which is shortly referred to as the sales type template and contains an instance group layout element and an instance template, wherein the instance template is a display template, referred to as a sales instance template, for an instance of the sales management XSGL software component class and the instance group layout element as a container is a stack layout element, referred to as a sales instance group layout element, responsible for the display layout between all instances of the sales management XSGL software component class, where the stack direction of the sales instance group layout element is set to the longitudinal direction as a default;
adding, in the sales instance template, a stack layout element which is referred to as a sales instance stack layout element whose layout direction is set to the horizontal direction;
adding, in the sales instance stack layout element, a stack layout element which is referred to as a sales product name stack layout element; the software interaction mold receives and responds to the command from the actual software modeling environment to successively accomplish the following operations: setting the layout direction of the sales product name stack layout element to the horizontal direction; adding, in the sales product name stack layout element, a tag element whose text content is set to "sales products" and which is shortly referred to as the sales product name tag element; adding, in the sales product name stack layout element, a tag element whose text content is set to "1" and which is shortly referred to as the sales serial number tag element;
adding, in the sales instance stack layout element, a stack layout element which is referred to as a sales data stack layout element whose layout direction is set to the longitudinal direction as a default;
adding, in the sales data stack layout element, a stack layout element which is shortly referred to as the sales contract quantity stack layout element whose layout direction is set to the horizontal direction; adding, in the sales contract quantity stack layout element, a tag element whose text content is "contract quantity" and the background color is set to gray; adding, in the sales contract quantity stack layout element, a tag element whose text content attribute is set to "0" and which is shortly referred to as the sales contract quantity display tag element;
adding, in the sales data stack layout element, a stack layout element which is referred to as a sales receipt quantity stack layout element whose layout direction is set to the horizontal direction; adding, in the sales receipt quantity stack layout element, a tag element whose text content is "receipt quantity" and the background color is set to gray; adding, in the sales receipt quantity stack layout element, a tag element whose text content attribute is set to "0" and which is shortly referred to as the sales receipt quantity display tag element;
adding,, in the sales data stack layout element, a stack layout element which is referred to as a sales shipment quantity stack layout element whose layout direction is set to the horizontal direction; adding, in the sales shipment quantity stack layout element, a tag element whose text content is "shipment quantity" and the background color is set to gray; adding, in the sales shipment quantity stack layout element, a tag element whose text content attribute is set to "0" and which is shortly referred to as the sales shipment quantity display tag element;
adding, in the sales data stack layout element, a stack layout element which is referred to as a total sales shipment quantity stack layout element whose layout direction is set to the horizontal direction; adding, in the total sales shipment quantity stack layout element, a tag element whose text content is "total shipment quantity" and the background color is set to gray; adding, in the total sales shipment quantity stack layout element, a tag element whose text content attribute is set to "0" and which is shortly referred to as the total sales shipment quantity display tag element; and
adding, in the sales instance stack layout element, a component interaction element based on the sales display function of the distributed sales product FXP software component class and adding, in the sales instance stack layout element, a component interaction element based on the sales display function of the direct sales product FXP software component class.

### Production display interaction model

As shown in Fig. 21, , the construction procedure of the production display interaction model is similar to that of "business display interaction model" and the content thereof is as follows:
creating, as a template of the production display interaction model, a type template which is shortly referred to as the production type template and contains an instance group layout element and an instance template, wherein the instance template is a display template, referred to as a production instance template, for an instance of the production management SCGL software component class and the instance group layout element as a container is a stack layout element, referred to as a production instance group layout element, responsible for the display layout between all instances of the production management SCGL software component class, where the stack direction of the production instance group layout element is set to the longitudinal direction as a default;
adding, in the production instance template, a stack layout element which is referred to as a production instance stack layout element whose layout direction is set to the horizontal direction;
adding, in the production instance stack layout element, a stack layout element which is referred to as a produced product name stack layout element; the software interaction mold receives and responds to the command from the actual software modeling environment to successively accomplish the following operations: setting the layout direction of the produced product name stack layout element to the horizontal direction; adding, in the produced product name stack layout element, a tag element whose text content is set to "produced products" and which is shortly referred to as the produced product name tag element; adding, in the produced product name stack layout element, a tag element whose text content is set to "1" and which is shortly referred to as the produced product serial number tag element;
adding, in the production instance stack layout element, a stack layout element which is referred to as a production data stack layout element whose layout direction is set to the longitudinal direction as a default;
adding, in the production data stack layout element, a stack layout element which is shortly referred to as the production order quantity stack layout element whose layout direction is set to the horizontal direction; adding, in the production order quantity stack layout element, a tag element whose text content is "order quantity" and the background color is set to gray; adding, in the production order quantity stack layout element, a tag element whose text content attribute is set to "0" and which is shortly referred to as the production order quantity display tag element;
adding, in the production data stack layout element, a stack layout element which is referred to as a production completion quantity stack layout element whose layout direction is set to the horizontal direction; adding, in the production completion quantity stack layout element, a tag element whose text content is "processed quantity" and the background color is set to gray; adding, in the production completion quantity stack layout element, a tag element whose text content attribute is set to "0" and which is referred to as a production completion quantity display tag element;
adding, in the production data stack layout element, a stack layout element which is referred to as a production delivery quantity stack layout element whose layout direction is set to the horizontal direction; adding, in the production delivery quantity stack layout element, a tag element whose text content is "delivery quantity" and the background color is set to gray; adding, in the production delivery quantity stack layout element, a tag element whose text content attribute is set to "0" and which is referred to as a production delivery quantity display tag element for the convenience for the description;
adding, in the production data stack layout element, a stack layout element which is referred to as a production total delivery quantity stack layout element whose layout direction is set to the horizontal direction; adding, in the production total delivery quantity stack layout element, a tag element whose text content is "total delivery quantity" and the background color is set to gray; adding, in the production total delivery quantity stack layout element, a tag element whose text content attribute is set to "0" and which is referred to as a production total delivery quantity display tag element for the convenience for the description;
adding, in the production instance layout element, a button element which is shortly referred to as the production completion button element whose content attribute is set to "production completion";
adding, in the production instance stack layout element, a component interaction element based on the main parts display function of the main parts ZJ software component class; adding, in the production instance stack layout element, a component interaction element based on the auxiliary parts display function of the auxiliary parts LJ software component class; and adding, in the production instance stack layout element, a component interaction element based on the finished product display function of the finished product CP software component class.

### Purchase display interaction model

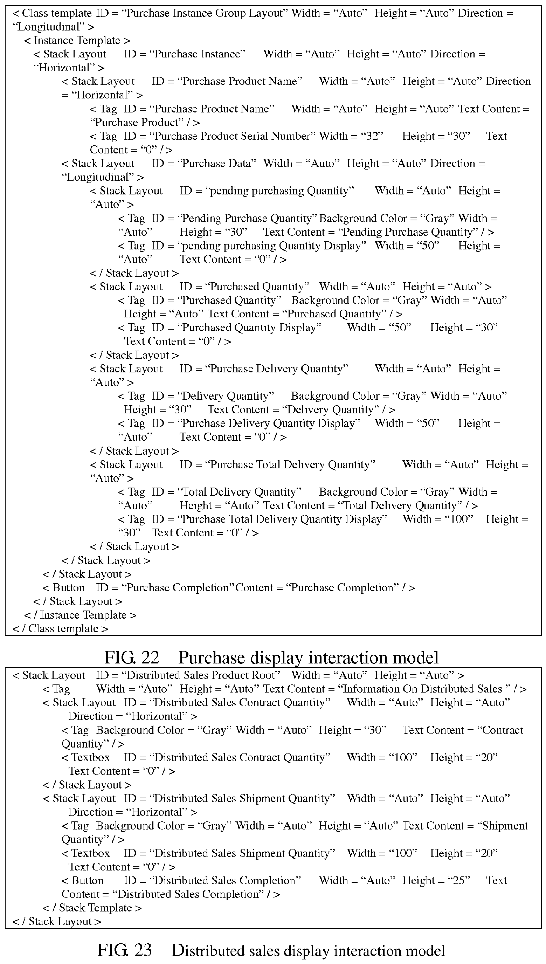

As shown in Fig. 22, , the construction procedure of the purchase display interaction model is similar to that of "business display interaction model" and the content thereof is as follows:
creating, as a template of the purchase display interaction model, a type template which is shortly referred to as the purchase type template and contains an instance group layout element and an instance template, wherein the instance template is a display template, referred to as a purchase instance template, for an instance of the purchase management CGGL software component class and the instance group layout element as a container is a stack layout element, referred to as a purchase instance group layout element, responsible for the display layout between all instances of the purchase management CGGL software component class, where the stack direction of the purchase instance group layout element is set to the longitudinal direction as a default;
adding, in the purchase instance template, a stack layout element which is referred to as a purchase instance stack layout element whose layout direction is set to the horizontal direction;
adding, in the purchase instance stack layout element, a stack layout element which is referred to as a purchase product name stack layout element; the software interaction mold receives and responds to the command from the actual software modeling environment to successively accomplish the following operations: setting the layout direction of the purchase product name stack layout element to the horizontal direction; adding, in the purchase product name stack layout element, a tag element whose text content is set to "purchase products" and which is shortly referred to as the purchase product name tag element; adding, in the purchase product name stack layout element, a tag element whose text content is set to "1" and which is shortly referred to as the purchase product serial number tag element;
adding, in the purchase instance stack layout element, a stack layout element which is referred to as a purchase data stack layout element whose layout direction is set to the longitudinal direction as a default;
adding, in the purchase data stack layout element, a stack layout element which is shortly referred to as the pending purchasing quantity stack layout element; adding, in the pending purchasing quantity stack layout element, a tag element whose text content is "pending purchase quantity" and the background color is set to gray; adding, in the pending purchasing quantity stack layout element, a tag element whose text content attribute is set to "0" and which is shortly referred to as the pending purchasing quantity display tag element;
adding, in the purchase data stack layout element, a stack layout element which is referred to as a purchased quantity stack layout element; adding, in the purchased quantity layout element, a tag element whose text content is "purchased quantity" and the background color is set to gray; adding, in the purchased quantity stack layout element, a tag element whose text content attribute is set to "0" and which is referred to as a purchased quantity display tag element;
adding, in the purchase data stack layout element, a stack layout element which is referred to as a purchase delivery quantity stack layout element; adding, in the purchase delivery quantity layout element, a tag element whose text content is "delivery quantity" and the background color is set to gray; adding, in the purchase delivery quantity stack layout element, a tag element whose text content attribute is set to "0" and which is referred to as a purchase delivery quantity display tag element for the convenience for the description;
adding, in the purchase data stack layout element, a stack layout element which is referred to as a purchase total delivery quantity stack layout element; adding, in the purchase total delivery quantity layout element, a tag element whose text content is "total delivery quantity" and the background color is set to gray; adding, in the purchase total delivery quantity stack layout element, a tag element whose text content attribute is set to "0" and which is referred to as a purchase total delivery quantity display tag element for the convenience for the description;
adding, in the purchase instance layout element, a button element which is shortly referred to as the purchase completion button element whose content attribute is set to "purchase completion".

### Distributed sales display interaction model

As shown in Fig. 23, , the construction procedure of the distributed sales display interaction model is similar to that of "business display interaction model" and the content thereof is as follows:
creating, as a root element, a stack layout element referred to as a distributed sales product root layout element; the software interaction mold setting the distributed sales product root layout element to the involved interaction element;
adding, in the distributed sales product root layout element, a tag element as a child interaction element; and setting the text content attribute of the involved tag element to the word "information on the distributed sales";
adding, in the distributed sales product root layout element, a stack layout element which is shortly referred to as the distributed sales contract quantity stack layout element whose layout direction is set to the horizontal direction; adding, in the distributed sales contract quantity stack layout element, a tag element whose text content is "contract quantity" and the background color is set to gray; adding, in the distributed sales contract quantity stack layout element, a textbox element whose text content attribute is set to "0" and which is shortly referred to as the distributed sales contract quantity textbox element;
adding, in the distributed sales product root layout element, a stack layout element which is shortly referred to as the distributed sales shipment quantity stack layout element whose layout direction is set to the horizontal direction; adding, in the distributed sales shipment quantity stack layout element, a tag element whose text content is "shipment quantity" and the background color is set to gray; adding, in the distributed sales shipment quantity stack layout element, a textbox element whose text content attribute is set to "0" and which is shortly referred to as the distributed sales contract quantity textbox element; adding, in the distributed sales shipment quantity stack layout element, a button element whose text content attribute is set to "distributed sales completion" and which is shortly referred to as the distributed sales completion button element.

### Direct sales display interaction model

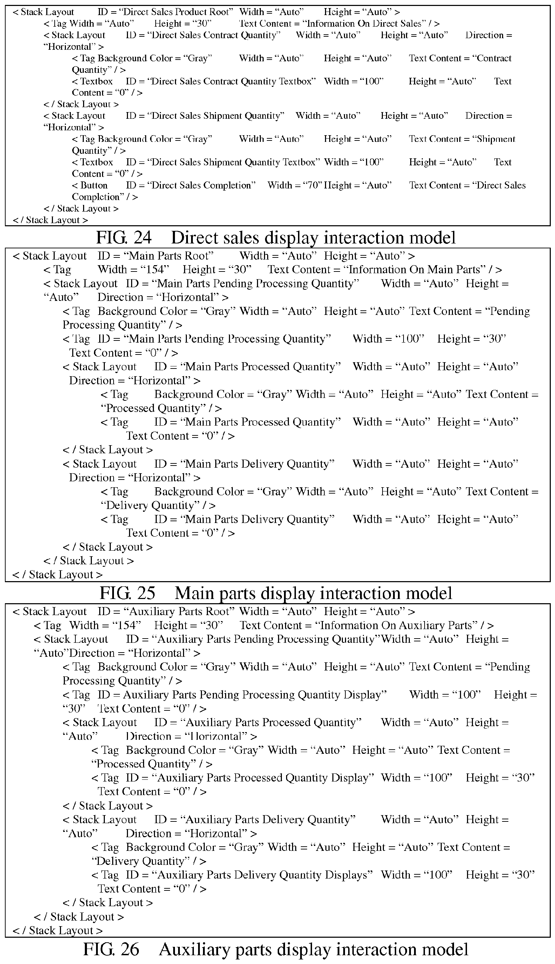

As shown in Fig. 24, , the construction procedure of the direct sales display interaction model is similar to that of "business display interaction model" and the content thereof is as follows:
creating, as a root element, a stack layout element referred to as a direct sales product root layout element; the software interaction mold setting the direct sales product root layout element to the involved interaction element;
adding, in the direct sales product root layout element, a tag element as a child interaction element; and setting the text content attribute of the involved tag element to the word "information on the direct sales";
adding, in the direct sales product root layout element, a stack layout element which is shortly referred to as the direct sales contract quantity stack layout element whose layout direction is set to the horizontal direction; adding, in the direct sales contract quantity stack layout element, a tag element whose text content is "contract quantity" and the background color is set to gray; adding, in the direct sales contract quantity stack layout element, a textbox element whose text content attribute is set to "0" and which is shortly referred to as the direct sales contract quantity textbox element;
adding, in the direct sales product root layout element, a stack layout element which is shortly referred to as the direct sales shipment quantity stack layout element whose layout direction is set to the horizontal direction; adding, in the direct sales shipment quantity stack layout element, a tag element whose text content is "shipment quantity" and the background color is set to gray; adding, in the direct sales shipment quantity stack layout element, a textbox element whose text content attribute is set to "0" and which is shortly referred to as the direct sales shipment quantity textbox element; adding, in the direct sales shipment quantity stack layout element, a button element whose text content attribute is set to "direct sales completion" and which is shortly referred to as the direct sales completion button element.

### Main parts display interaction model

As shown in Fig. 25, , the construction procedure of the main parts display interaction models similar to that of "business display interaction model" and the content thereof is as follows:
creating, as a root element, a stack layout element referred to as a main parts root layout element; the software interaction mold setting the main parts root layout element to the involved interaction element;
adding, the main parts root layout element, a tag element as a child interaction element; and setting a text content attribute of the involved tag element to the word "information on the main parts";
adding, in the main parts root layout element, a stack layout element which is shortly referred to as the main parts pending processing quantity stack layout element whose layout direction is set to the horizontal direction; adding, in the main parts pending processing quantity stack layout element, a tag element whose text content is "main parts pending processing quantity" and the background color is set to gray; adding, in the main parts pending processing quantity stack layout element, a tag element whose text content attribute is set to "0" and which is shortly referred to as the main parts pending processing quantity display tag element;
adding, in the main parts root layout element, a stack layout element which is shortly referred to as the main parts processed quantity stack layout element whose layout direction is set to the horizontal direction; adding, in the main parts processed quantity stack layout element, a tag element whose text content is "processed quantity" and the background color is set to gray; adding, in the main parts processed quantity stack layout element, a tag element whose text content attribute is set to "0" and which is shortly referred to as the main parts processed quantity display tag element;
adding, in the main parts root layout element, a stack layout element which is shortly referred to as the main parts delivery quantity stack layout element whose layout direction is set to the horizontal direction; adding, in the main parts delivery quantity stack layout element, a tag element whose text content is "delivery quantity" and the background color is set to gray; adding, in the main parts delivery quantity stack layout element, a tag element whose text content attribute is set to "0" and which is shortly referred to as the main parts delivery quantity display tag element.

### Auxiliary parts display interaction model

As shown in Fig. 26, , the construction procedure of the auxiliary parts display interaction model is similar to that of "business display interaction model" and the content thereof is as follows:
creating, as a root element, a stack layout element referred to as an auxiliary parts root layout element; the software interaction mold setting the auxiliary parts root layout element as an involved interaction element;
adding, in the auxiliary parts root layout element, a tag element as a child interaction element; and setting a text content attribute of the involved tag element as the word "information on the auxiliary parts";
adding, in the auxiliary parts root layout element, a stack layout element which is shortly referred to as the auxiliary parts pending processing quantity stack layout element whose layout direction is set to the horizontal direction; adding, in the auxiliary parts pending processing quantity stack layout element, a tag element whose text content is "main parts pending processing quantity" and the background color is set to gray; adding, in the auxiliary parts pending processing quantity stack layout element, a tag element whose text content attribute is set to "0" and which is shortly referred to as the auxiliary parts pending processing quantity display tag element;
adding, in the auxiliary parts root layout element, a stack layout element which is shortly referred to as the auxiliary parts processed quantity stack layout element whose layout direction is set to the horizontal direction; adding, in the auxiliary parts processed quantity stack layout element, a tag element whose text content is "processed quantity" and the background color is set to gray; adding, in the auxiliary parts processed quantity stack layout element, a tag element whose text content attribute is set to "0" and which is shortly referred to as the auxiliary parts processed quantity display tag element;
adding, in the auxiliary parts root layout element, a stack layout element which is shortly referred to as the auxiliary parts delivery quantity stack layout element whose layout direction is set to the horizontal direction; adding, in the auxiliary parts delivery quantity stack layout element, a tag element whose text content is "delivery quantity" and the background color is set to gray; adding, in the auxiliary parts delivery quantity stack layout element, a tag element whose text content attribute is set to "0" and which is shortly referred to as the auxiliary parts delivery quantity display tag element.

### Finished product display interaction model

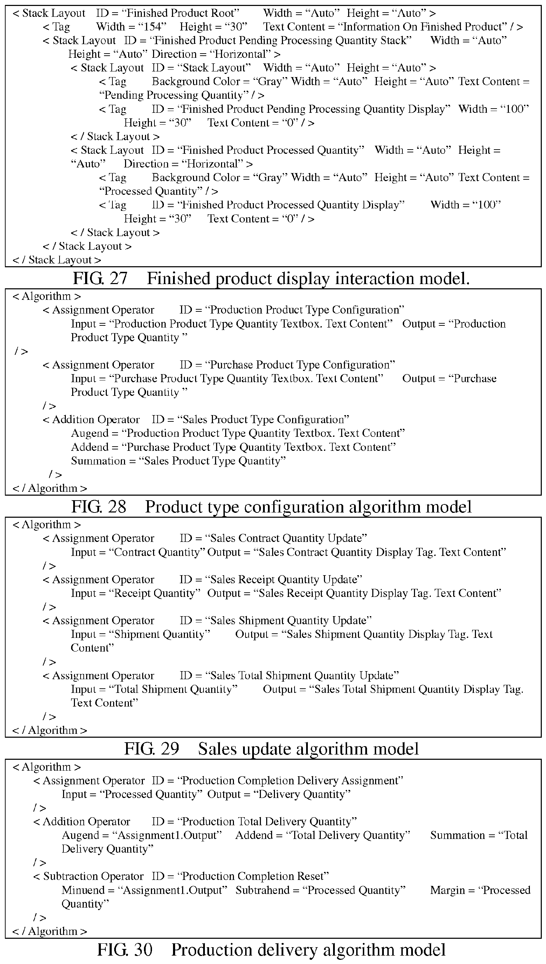

As shown in Fig. 27, , the construction procedure of the finished product display interaction model is similar to that of "business display interaction model" and the content thereof is as follows:
creating, as a root element, a stack layout element referred to as a finished product root layout element; and the software interaction mold setting the finished product root layout element to the involved interaction element;
adding, in the finished product root layout element, a tag element as a child interaction element; setting a text content attribute of the involved tag element to the word "information on the finished product";
adding, in the finished product root layout element, a stack layout element which is shortly referred to as the finished product pending processing quantity stack layout element whose layout direction is set to the horizontal direction; adding, in the finished product pending processing quantity stack layout element, a tag element whose text content is "finished product pending processing quantity" and the background color is set to gray; adding, in the finished product pending processing quantity stack layout element, a tag element whose text content attribute is set to "0" and which is shortly referred to as the finished product pending processing quantity display tag element;
adding, in the finished product root layout element, a stack layout element which is shortly referred to as the finished product processed quantity stack layout element whose layout direction is set to the horizontal direction; adding, in the finished product processed quantity stack layout element, a tag element whose text content is "processed quantity" and the background color is set to gray; adding, in the finished product processed quantity stack layout element, a tag element whose text content attribute is set to "0" and which is shortly referred to as the finished product processed quantity display tag element.

### Constructing the software algorithm models

Next, the construction procedure of each software algorithm model will be described in detail.

### Product type configuration algorithm model

Fig. 28 schematically is the accomplished software algorithm model of the product type configuration function of the business management YWGL software component class whose construction procedure is as follows:
the software hierarchy mold receives and responds to the command from the actual software modeling environment to set the business management YWGL software component class to the involved software component class; the software interface mold receives and responds to the command from the actual software modeling environment to set the product type configuration function to the involved function, wherein the software algorithm model for implementing the product type configuration function is shortly referred to as the product type configuration algorithm model in accordance with the function name and software algorithm models for the subsequent other functions may be deduced by analogy, which will not be repeated below;
in the foregoing steps, adding an assignment operator shortly referred to as a produced product type configuration operator which has an input attribute and an output attribute; creating an assignment from the text content attribute of the production product type quantity textbox element in the business display interaction model to the input attribute of produced product type configuration operator; creating an assignment from the output attribute of produced product type configuration operator to the production product type quantity attribute of the business management YWGL software component class;
in the foregoing steps, adding an assignment operator shortly referred to as a purchase product type configuration operator which has an input attribute and an output attribute; creating an assignment from the text content attribute of the purchase product type quantity textbox element in the business display interaction model to the input attribute of the purchase product type configuration operator; creating an assignment from the output attribute of the purchase product type configuration operator to the purchase product type quantity attribute of the business management YWGL software component class;
in the foregoing steps, adding an addition operator shortly referred to as a sales product type configuration operator; creating an assignment from the text content attribute of the production product type quantity textbox element to the augend attribute of the sales product type configuration operator; creating an assignment from the text content attribute of the purchase product type quantity textbox element to the addend attribute of the sales product type configuration operator; creating an assignment from the summation attribute of the sales product type configuration operator to the sales product type quantity attribute of the business management YWGL software component class;

So far, the product type configuration algorithm model is accomplished.

### Sales update algorithm model

As shown in Fig. 29, , the construction procedure of the sales update algorithm model is similar to that of "product type configuration algorithm model" and the content thereof is as follows:
an assignment operator which is shortly referred to as the sales contract quantity update operator which has the following assignments: from the contract quantity attribute of the sales management XSGL software component class to the sales contract quantity update operator; and from the output attribute of the sales contract quantity update operator to the text content attribute of the sales contract quantity display tag element in the sales display interaction model;
an assignment operator which is shortly referred to as the sales receipt quantity update operator which has the following assignments: from the receipt quantity attribute of the sales management XSGL software component class to the input attribute of the sales receipt quantity update operator; and from the output attribute of the sales receipt quantity update operator to the text content attribute of the sales receipt quantity display tag element in the sales display interaction model;
an assignment operator which is shortly referred to as the sales shipment quantity update operator which has the following assignments: from the shipment quantity attribute of the sales management XSGL software component class to the input attribute of the sales shipment quantity update operator; and from the output attribute of the sales shipment quantity update operator to the text content attribute of the sales shipment quantity display tag element in the sales display interaction model;
an assignment operator which is shortly referred to as the sales total shipment quantity update operator which has the following assignments: from the total shipment quantity attribute of the sales management XSGL software component class to the input attribute of the sales total shipment quantity update operator; and from the output attribute of the sales total shipment quantity update operator to the text content attribute of the sales total shipment quantity display tag element in the sales display interaction model.

### Production delivery algorithm model

As shown in Fig. 30, the construction procedure of the production delivery algorithm model is similar to that of "product type configuration algorithm model" and the content thereof is as follows:
an assignment operator which is shortly referred to as the production completion delivery assignment operator which has the following assignments: from the processed quantity attribute of the production management SCGL software component class to the input attribute of the production completion delivery assignment operator; and from the output attribute of the production completion delivery assignment operator to the delivery quantity attribute of the production management SCGL software component class;
an addition operator which is shortly referred to as the production total delivery quantity operator which has the following assignments: from the processed quantity attribute of the production management SCGL software component class to the augend attribute of the production total delivery quantity operator; from the total delivery quantity attribute of the production management SCGL software component class to the addend attribute of the production total delivery quantity operator; and from the summation attribute of the production total delivery quantity operator to the total delivery quantity attribute of the production management SCGL software component class;
an subtraction operator which is shortly referred to as the production completion reset operator which has the following assignments: from the processed quantity attribute of the production management SCGL software component class to the minuend attribute of the production completion reset operator; from the processed quantity attribute of the production management SCGL software component class to the subtrahend attribute of the production completion reset operator; and from the margin attribute of the production completion reset operator to the processed quantity attribute of the production management SCGL software component class;

### Production update algorithm model

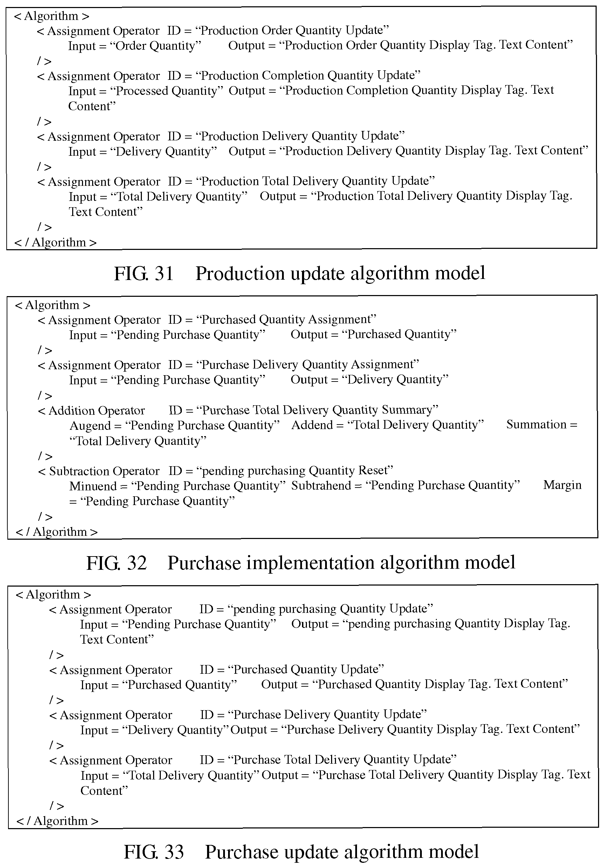

As shown in Fig. 31, the construction procedure of the production update algorithm model is similar to that of "product type configuration algorithm model" and the content thereof is as follows:
an assignment operator which is shortly referred to as the production order quantity update operator which has the following assignments: from the order quantity attribute of the production management SCGL software component class to the input attribute of the production order quantity update operator; and from the output attribute of the production order quantity update operator to the text content attribute of the production order quantity display tag element in the production display interaction model;
an assignment operator which is shortly referred to as the production completion quantity update operator which has the following assignments: from the processed quantity attribute of the production management SCGL software component class to the input attribute of the production completion quantity update operator; and from the output attribute of the production completion quantity update operator to the text content attribute of the production completion quantity display tag element in the production display interaction model;
an assignment operator which is shortly referred to as the production delivery quantity update operator which has the following assignments: from the delivery quantity attribute of the production management SCGL software component class to the input attribute of the production delivery quantity update operator; and from the output attribute of the production delivery quantity update operator to the text content attribute of the production delivery quantity display tag element in the production display interaction model;
an assignment operator which is shortly referred to as the production total delivery quantity update operator which has the following assignments: from the total delivery quantity attribute of the production management SCGL software component class to the input attribute of the production total delivery quantity update operator; and from the output attribute of the production total delivery quantity update operator to the text content attribute of the production total delivery quantity display tag element in the production display interaction model.

### Purchase implementation algorithm model

As shown in Fig. 32, the construction procedure of the purchase implementation algorithm model is similar to that of "product type configuration algorithm model" and the content thereof is as follows:
an assignment operator which is shortly referred to as the purchased quantity assignment operator which has the following assignments: from the pending purchase quantity attribute of the purchase management CGGL software component class to the input attribute of the purchased quantity assignment operator; and from the output attribute of the purchased quantity assignment operator to the purchased quantity attribute of the purchase management CGGL software component class;
an assignment operator which is shortly referred to as the purchase delivery quantity assignment operator which has the following assignments: from the pending purchase quantity attribute of the purchase management CGGL software component class to the input attribute of the purchase delivery quantity assignment operator; and from the output attribute of the purchase delivery quantity assignment operator to the delivery quantity attribute of the purchase management CGGL software component class;
an addition operator which is shortly referred to as the purchase total delivery quantity summary operator which has the following assignments: from the pending purchase quantity attribute of the purchase management CGGL software component class to the augend attribute of the purchase total delivery quantity summary operator; from the total delivery quantity attribute of the purchase management CGGL software component class to the addend attribute of the purchase total delivery quantity summary operator; and from the summation attribute of the purchase total delivery quantity summary operator to the total delivery quantity of the purchase management CGGL software component class;
an subtraction operator which is shortly referred to as the pending purchasing quantity reset operator which has the following assignments: from the pending purchase quantity attribute of the purchase management CGGL software component class to the minuend attribute of the pending purchasing quantity reset operator; from the pending purchase quantity attribute of the purchase management CGGL software component class to the subtrahend attribute of the pending purchasing quantity reset operator; and from the output attribute of the pending purchasing quantity reset operator to the pending purchase quantity attribute of the purchase management CGGL software component class.

### Purchase update algorithm model

As shown in Fig. 33, the construction procedure of the purchase update algorithm model is similar to that of "product type configuration algorithm model" and the content thereof is as follows:
an assignment operator which is shortly referred to as the pending purchasing quantity update operator which has the following assignments: from the pending purchase quantity attribute of the purchase management CGGL software component class to the input attribute of the pending purchasing quantity update operator; and from the output attribute of the pending purchase quantity update operator to the text content attribute of the pending purchasing quantity display tag element in the purchase display interaction model;
an assignment operator which is shortly referred to as the purchased quantity update operator which has the following assignments: from the purchased quantity attribute of the purchase management CGGL software component class to the input attribute of the purchased quantity update operator; and from the output attribute of the purchased quantity update operator to the text content attribute of the purchased quantity display tag element in the purchase display interaction model;
an assignment operator which is shortly referred to as the purchase delivery quantity update operator which has the following assignments: from the delivery quantity attribute of the purchase management CGGL software component class to the input attribute of the purchase delivery quantity update operator; and from the output attribute of the purchase delivery quantity update operator to the text content attribute of the purchase delivery quantity display tag element in the purchase display interaction model;
an assignment operator which is shortly referred to as the purchase total delivery quantity update operator which has the following assignments: from the total delivery quantity attribute of the purchase management CGGL software component class to the input attribute of the purchase total delivery quantity update operator; and from the output attribute of the purchase total delivery quantity update operator to the text content attribute of the purchase total delivery quantity display tag element in the purchase display interaction model;

### Distributed sales update algorithm model

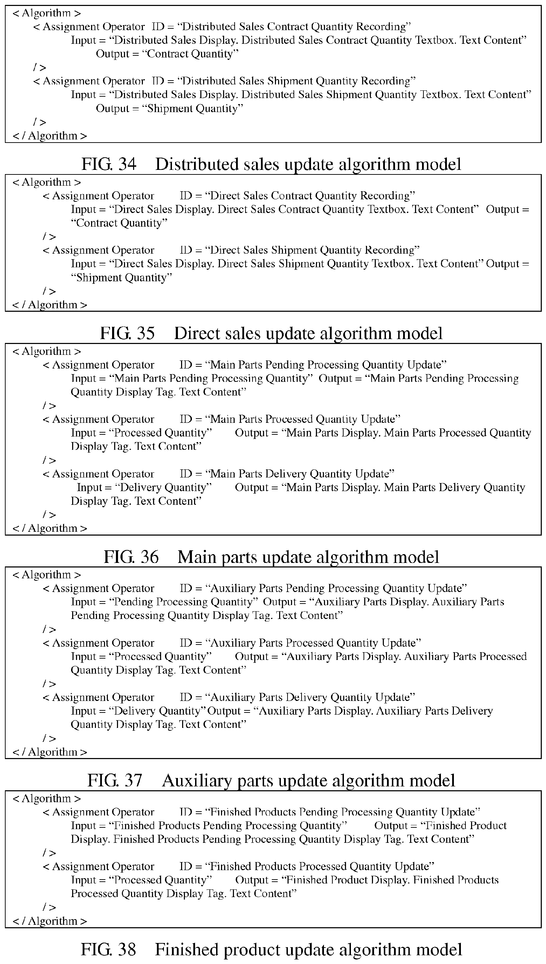

As shown in Fig. 34, the construction procedure of the distributed sales update algorithm model is similar to that of "product type configuration algorithm model" and the content thereof is as follows:
an assignment operator which is shortly referred to as the distributed sales contract quantity recording operator which has the following assignments: from the text content attribute of the distributed sales contract quantity textbox element in the distributed sales display interaction model to the input attribute of the distributed sales contract quantity recording operator; and from the output attribute of the distributed sales contract quantity recording operator to the contract quantity attribute of the distributed sales product FXP software component class;
an assignment operator which is shortly referred to as the distributed sales shipment quantity recording operator which has the following assignments: from the text content attribute of the distributed sales shipment quantity textbox element in the distributed sales display interaction model to the input attribute of the distributed sales shipment quantity recording operator; and from the output attribute of the distributed sales shipment quantity recording operator to the shipment quantity attribute of the distributed sales product FXP software component class.

### Direct sales update algorithm model

As shown in Fig. 35, the construction procedure of the direct sales update algorithm model is similar to that of "product type configuration algorithm model" and the content thereof is as follows:
an assignment operator which is shortly referred to as the direct sales contract quantity recording operator which has the following assignments: from the text content attribute of the direct sales contract quantity textbox element in the direct sales display interaction model to the input attribute of the direct sales contract quantity recording operator; and from the output attribute of the direct sales contract quantity recording operator to the contract quantity attribute of direct sales product ZXP software component class;
an assignment operator which is shortly referred to as the direct sales shipment quantity recording operator which has the following assignments: from the text content attribute of the direct sales shipment quantity textbox element in the direct sales display interaction model to the input attribute of the direct sales shipment quantity recording operator; and from the output attribute of the direct sales shipment quantity recording operator to the shipment quantity attribute of the direct sales product ZXP software component class.

### Main parts update algorithm model

As shown in Fig. 36, the construction procedure of the main parts update algorithm model is similar to that of "product type configuration algorithm model" and the content thereof is as follows:
an assignment operator which is shortly referred to as the main parts pending processing quantity update operator which has the following assignments: from the main parts pending processing quantity attribute of the main parts ZJ software component class to the input attribute of the main parts pending processing quantity update operator; and from the output attribute of the main parts pending processing quantity update operator to the text content attribute of the main parts pending processing quantity display tag element in the main parts display interaction model;
an assignment operator which is shortly referred to as the main parts processed quantity update operator which has the following assignments: from the processed quantity attribute of the main parts ZJ software component class to the input attribute of the main parts processed quantity update operator; and from the output attribute of the main parts processed quantity update operator to the text content attribute of the main parts processed quantity display tag element in the main parts display interaction model;
an assignment operator which is shortly referred to as the main parts delivery quantity update operator which has the following assignments: from the delivery quantity attribute of the main parts ZJ software component class to the input attribute of the main parts delivery quantity update operator; and from the output attribute of the main parts delivery quantity update operator to the text content attribute of the main parts delivery quantity display tag element in the main parts display interaction model.

### Auxiliary parts update algorithm model

As shown in Fig. 37, the construction procedure of the auxiliary parts update algorithm model is similar to that of "product type configuration algorithm model" and the content thereof is as follows:
an assignment operator which is shortly referred to as the auxiliary parts pending processing quantity update operator which has the following assignments: from the auxiliary parts pending processing quantity attribute of the auxiliary parts LJ software component class to the input attribute of the auxiliary parts pending processing quantity update operator; and from the output attribute of the auxiliary parts pending processing quantity update operator to the text content attribute of the auxiliary parts pending processing quantity display tag element in the auxiliary parts display interaction model;
an assignment operator which is shortly referred to as the auxiliary parts processed quantity update operator which has the following assignments: from the processed quantity attribute of the auxiliary parts LJ software component class to the input attribute of the auxiliary parts processed quantity update operator; and from the output attribute of the auxiliary parts processed quantity update operator to the text content attribute of the auxiliary parts processed quantity display tag element in the auxiliary parts display interaction model;
an assignment operator which is shortly referred to as the auxiliary parts delivery quantity update operator which has the following assignments: from the delivery quantity attribute of the auxiliary parts LJ software component class to the input attribute of the auxiliary parts delivery quantity update operator; and from the output attribute of the auxiliary parts delivery quantity update operator to the text content attribute of the auxiliary parts delivery quantity display tag element in the auxiliary parts display interaction model.

### Finished product update algorithm model

As shown in Fig. 38, the construction procedure of the finished product update algorithm model is similar to that of "product type configuration algorithm model" and the content thereof is as follows:
an assignment operator which is shortly referred to as the finished product pending processing quantity update operator which has the following assignments: from the finished product pending processing quantity attribute of the finished product CP software component class to the input attribute of the finished product pending processing quantity update operator; and from the output attribute of the finished product pending processing quantity update operator to the text content attribute of the finished product pending processing quantity display tag element in the finished product display interaction model;
an assignment operator which is shortly referred to as the finished product processed quantity update operator which has the following assignments: from the processed quantity attribute of the finished product CP software component class to the input attribute of the finished product processed quantity update operator; and from the output attribute of the finished product processed quantity update operator to the text content attribute of the finished product processed quantity display tag element in the finished product display interaction model;

### Main parts processing algorithm model

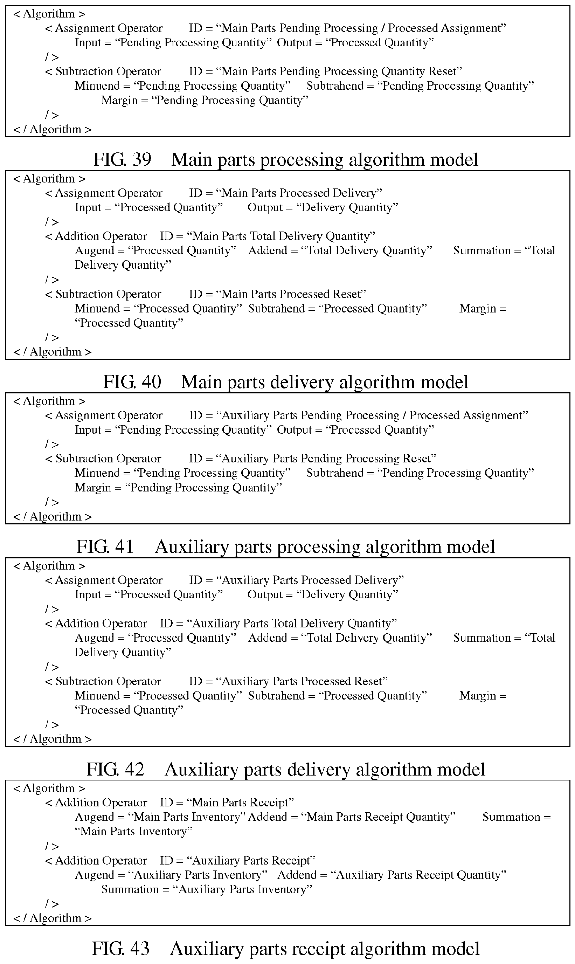

As shown in Fig. 39, the construction procedure of the main parts processing algorithm model is similar to that of "product type configuration algorithm model" and the content thereof is as follows:
an assignment operator which is shortly referred to as the main parts pending processing / processed assignment operator which has the following assignments: from the main parts pending processing quantity attribute of the main parts ZJ software component class to the input attribute of the main parts pending processing / processed assignment operator; and from the output attribute of the main parts pending processing / processed assignment operator to the processed quantity attribute of the main parts ZJ software component class;
a subtraction operator which is shortly referred to as the main parts pending processing reset operator which has the following assignments: from the main parts pending processing quantity attribute of the main parts ZJ software component class to the minuend attribute of the main parts pending processing reset operator; from the main parts pending processing quantity attribute of the main parts ZJ software component class to the subtrahend attribute of the main parts pending processing reset operator; and from the margin attribute of the main parts pending processing reset operator to the pending processing quantity attribute of the main parts ZJ software component class.

### Main parts delivery algorithm model

As shown in Fig. 40, the construction procedure of the main parts delivery algorithm model is similar to that of "product type configuration algorithm model" and the content thereof is as follows:
an addition operator which is shortly referred to as the main parts processed delivery operator which has the following assignments: from the processed quantity attribute of the main parts ZJ software component class to the input attribute of the main parts processed delivery operator; and from the output attribute of the main parts processed delivery operator to the delivery quantity attribute of the main parts ZJ software component class;
an addition operator which is shortly referred to as the main parts total delivery quantity operator which has the following assignments: from the processed quantity attribute of the main parts ZJ software component class to the augend attribute of the main parts total delivery quantity operator; from the total delivery quantity attribute of the main parts ZJ software component class to the addend attribute of the main parts total delivery quantity operator; and from the summation attribute of the main parts total delivery quantity operator to the total delivery quantity attribute of the main parts ZJ software component class;
a subtraction operator which is shortly referred to as the main parts processed reset operator which has the following assignments: from the processed quantity attribute of the main parts ZJ software component class to the minuend attribute of the main parts processed reset operator; from the processed quantity attribute of the main parts ZJ software component class to the subtrahend attribute of the main parts processed reset operator; and from the margin attribute of the main parts processed reset operator to the processed quantity attribute of the main parts ZJ software component class.

### Auxiliary parts processing algorithm model

As shown in Fig. 41, the construction procedure of the auxiliary parts processing algorithm model is similar to that of "product type configuration algorithm model" and the content thereof is as follows:
an assignment operator which is shortly referred to as the auxiliary parts pending processing / processed assignment operator which has the following assignments: from the auxiliary parts pending processing quantity attribute of the auxiliary parts LJ software component class to the input attribute of the auxiliary parts pending processing / processed assignment operator; and from the output attribute of the auxiliary parts pending processing / processed assignment operator to the processed quantity attribute of the auxiliary parts ZJ software component class;
a subtraction operator which is shortly referred to as the auxiliary parts pending processing reset operator which has the following assignments: from the auxiliary parts pending processing quantity attribute of the auxiliary parts LJ software component class to the minuend attribute of the auxiliary parts pending processing reset operator; from the auxiliary parts pending processing quantity attribute of the auxiliary parts LJ software component class to the subtrahend attribute of the auxiliary parts pending processing reset operator; and from the margin attribute of the auxiliary parts pending processing reset operator to the auxiliary parts pending processing quantity attribute of the auxiliary parts LJ software component class.

### Auxiliary parts delivery algorithm model

As shown in Fig. 42, the construction procedure of the auxiliary parts delivery algorithm model is similar to that of "product type configuration algorithm model" and the content thereof is as follows:
an addition operator which is shortly referred to as the auxiliary parts processed delivery operator which has the following assignments: from the processed quantity attribute of the auxiliary parts LJ software component class to the input attribute of the auxiliary parts processed delivery operator; and from the output attribute of the auxiliary parts processed delivery operator to the delivery quantity attribute of the auxiliary parts LJ software component class;
an addition operator which is shortly referred to as the auxiliary parts total delivery quantity operator which has the following assignments: from the processed quantity attribute of the auxiliary parts LJ software component class to the augend attribute of the auxiliary parts total delivery quantity operator; from the total delivery quantity attribute of the auxiliary parts LJ software component class to the addend attribute of the auxiliary parts total delivery quantity operator; and from the summation attribute of the auxiliary parts total delivery quantity operator to the total delivery quantity attribute of the auxiliary parts LJ software component class;
a subtraction operator which is shortly referred to as the auxiliary parts processed reset operator which has the following assignments: from the processed quantity attribute of the auxiliary parts LJ software component class to the minuend attribute of the auxiliary parts processed reset operator; from the processed quantity attribute of the auxiliary parts LJ software component class to the subtrahend attribute of the auxiliary parts processed reset operator; and from the margin attribute of the auxiliary parts processed reset operator to the processed quantity attribute of the auxiliary parts LJ software component class.

### Auxiliary parts receipt algorithm model

As shown in Fig. 43, the construction procedure of the auxiliary parts receipt algorithm model is similar to that of "product type configuration algorithm model" and the content thereof is as follows:
an addition operator which is shortly referred to as the main parts receipt operator has the following assignments: from the main parts inventory quantity attribute of the involved software component class to the augend attribute of the main parts receipt operator; from the main parts receipt quantity attribute of the involved software component class to the addend attribute of the main parts receipt operator; and from the summation attribute of the main parts receipt operator to the main parts inventory quantity attribute of the finished product CP software component class;
an addition operator which is shortly referred to as the auxiliary parts receipt operator has the following assignments: from the auxiliary parts inventory quantity attribute of the involved software component class to the augend attribute of the auxiliary parts receipt operator; from the auxiliary parts receipt quantity attribute of the involved software component class to the addend attribute of the auxiliary parts receipt operator; and from the summation attribute of the auxiliary parts receipt operator to the auxiliary parts inventory quantity attribute of the finished product CP software component class.

### Finished product assembly algorithm model

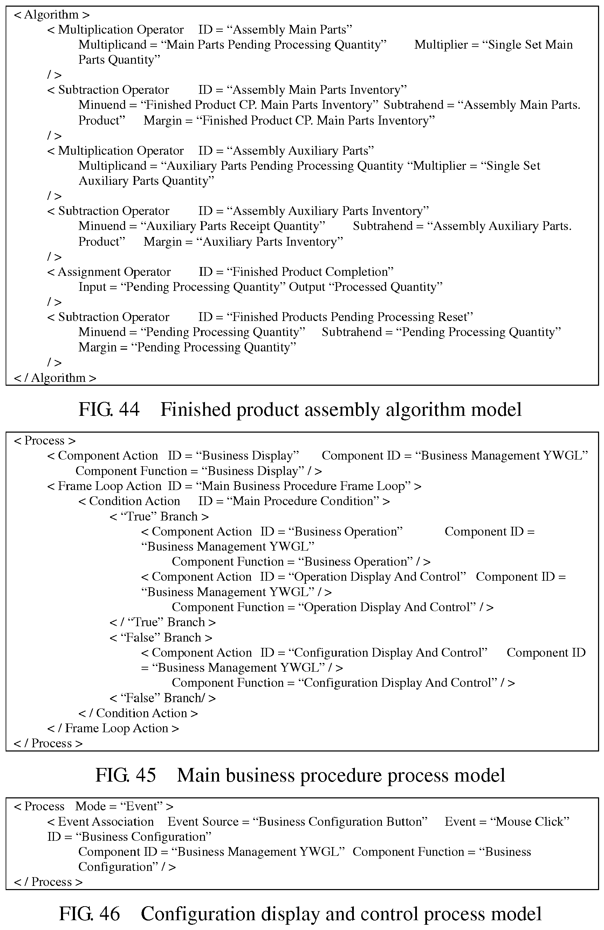

As shown in Fig. 44, the construction procedure of the finished product assembly algorithm model is similar to that of the "product type configuration algorithm model" and the content thereof is as follows:
a multiplication operator which is shortly referred to as the main parts assembly operator has the following assignments: from the pending processing quantity attribute of the involved software component class to the multiplicand input attribute of the main parts assembly operator; and from the single set main parts quantity attribute of the involved software component class to the multiplier input attribute of the main parts assembly operator;
a subtraction operator which is shortly referred to as the main parts assembly inventory operator has the following assignments: from the main parts inventory quantity attribute of the finished product CP software component class to the minuend attribute of the main parts assembly inventory operator; from the product attribute of the main parts assembly inventory operator to the subtrahend attribute of the main parts assembly inventory operator; and from the margin attribute of the main parts assembly inventory operator to the main parts inventory quantity attribute of the finished product CP software component class;
a multiplication operator which is shortly referred to as the an auxiliary-parts assembly operator has the following assignments: from the pending processing quantity attribute of the involved software component class to the multiplicand input attribute of the auxiliary parts assembly operator; and the single set auxiliary parts quantity attribute of the involved software component class to the multiplier input attribute of the auxiliary parts assembly operator;
a subtraction operator which is shortly referred to as the auxiliary parts assembly inventory operator has the following assignments: from the auxiliary parts inventory quantity attribute of the finished product CP software component class to the minuend attribute of the auxiliary parts assembly inventory operator; and from the product attribute of the auxiliary-parts assembly inventory operator to the subtrahend attribute of the auxiliary parts assembly inventory operator; and from the margin attribute of the auxiliary parts assembly inventory operator to the auxiliary parts inventory quantity attribute of the finished product CP software component class;
an assignment operator which is shortly referred to as the finished product processed operator has the following assignments: from the pending processing quantity attribute of the finished product CP software component class to the input attribute of the finished product processed operator; and from the output attribute of the finished product processed operator to the finished product CP software component class' processed quantity attribute;
a subtraction operator which is shortly referred to as the finished product pending processing reset operator has the following assignments: from the finished product CP software component class' pending processing quantity attribute to the minuend attribute of the finished product pending processing operator; from the pending processing quantity attribute of the involved software component class to the subtrahend attribute of the finished product pending processing operator; and from the margin attribute of the finished product pending processing operator to the pending processing quantity attribute of the finished product CP software component class.

### Constructing the software process models

Next, the construction procedure of each software process model will be described in detail.

### Main business procedure process model

Fig. 45 shows a completed main business procedure process model for the business management YWGL software component class. It is constructed as follows:
the software hierarchy mold receives and responds to the command from the actual software modeling environment to set the business management YWGL software component class as the involved software component classes;
the software interface mold receives and responds to the command from the actual software modeling environment to set the main business procedure function as the involved function, wherein, for the convenience of describing the description, the software process model of the main business procedure function is shortly referred to as the main business procedure process model in accordance with the function name and names of process models for the other functions may be deduced by analogy, which will not be repeated below; and wherein the software process mold constructs the main business procedure process model with an attribute process model as a default;
the software process mold first creates a sequential action as the root action for the main business procedure process model, wherein the sequential action is an operator action with sequential execution internal action function, has a start node and an end node, and may sequentially add other actions between the start node and the end node, and wherein, for the convenience of describing the description, the root action is referred to as a main business procedure root action in accordance with the name of the software process model; it should be noted that the software process mold creates a root action for each software process model as a default, of which the name of the root action may be deduced by analogy and will not be repeated below;
the software process mold receives the command from the actual software modeling environment to add an action based on a business display function of the involved software component class; for the convenience of describing the description, based on the name of function on which the action depends, the action is shortly referred to as the business display action and names for subsequent actions may be deduced by analogy, which will not be repeated below; and the software process mold adds a business display action in the main business procedure root action in response to the foregoing command;
the software process mold receives the command from the actual software modeling environment to add a frame loop action; and the software process mold adds a frame loop action in the main business procedure root action, wherein the frame loop action is an operator action with a frame loop function, there is a sequence of nodes inside the frame loop action, and each node may accommodates another action; and for the convenience of describing the description, the sequence of the nodes of the frame loop action is referred to as a frame loop sequence and the frame loop action is shortly referred to as a main procedure frame loop action;
the software process mold receives and responds to the command from the actual software modeling environment to add a condition action in the frame loop sequence of the main procedure frame loop action, wherein the condition action is shortly referred to as a main procedure condition action and is an operator action with a condition logic function which has two branch action sequences corresponding to the "true" condition and the "false" condition, respectively;
in the foregoing steps, adding a component action, shortly referred to as a business operation action, based on the business operation function of the involved software component class in the branch action sequence of the main procedure condition action corresponding to the "true" condition, and then successionally adding an action, shortly referred to as an operation display and control action, based on the operation display and control function of the involved software component class in the branch action sequence of the main procedure condition action corresponding to the "true" condition, and adding a component action, shortly referred to as a configuration display and control action, based on the configuration display and control function of the involved software component class in the branch action sequence of the main procedure condition action corresponding to the "false" condition.

So far, the main business procedure process model is accomplished.

### Configuration display and control process model

As shown in Fig. 46, the construction procedure of the configuration display and control process model is similar to that of "main business procedure process model" and the content thereof is as follows:
adding an action for the business configuration function; and establishing an event association between the mouse click event of the business configuration button element in the business display interaction model and the business configuration action.

### Business configuration process model

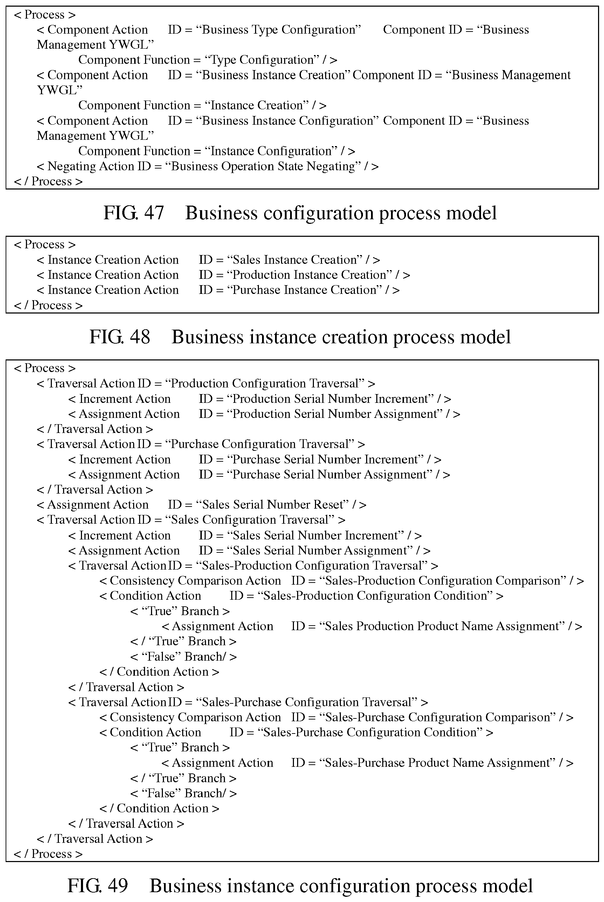

As shown in Fig. 47, the construction procedure of the business configuration process model is similar to that for the "main business procedure process model" and the content thereof is as follows:
adding, in the business configuration root action, the command based on the component action for the product type configuration function of the involved software component class and adding, in the business configuration root action, a product type configuration action which is shortly referred to as the business product type configuration action; adding, in the business configuration root action, the command based on the component action for the instance creation function of the involved software component class and adding, in the business configuration root action, an instance creation action which is shortly referred to as the business instance creation action; adding, in the business configuration root action, the command based on the component action for the instance configuration function of the involved software component class and adding, in the business configuration root action, an instance configuration action which is shortly referred to as the business instance configuration action; adding, in the business configuration root action, a negating operator action which is shortly referred to as the business operation state negating action.

### Business instance creation process model

As shown in Fig. 48, the construction procedure of the business instance creation process model is similar to that of "main business procedure process model" and the content thereof is as follows:
adding, in the instance creation root action, an instance creation operator action which is shortly referred to as the sales instance creation action, wherein the instance creation operator action is an operator action with a function for creating the software component instance and has a component class attribute and an instance quantity attribute; adding, in the instance creation root action, an instance creation operator action which is shortly referred to as the production instance creation action; adding, in the instance creation root action, an instance creation operator action which is shortly referred to as the purchase instance creation action.

### Business instance configuration process model

As shown in Fig. 49, the construction procedure of the business instance configuration process model is similar to that of "main business procedure process model" and the content thereof is as follows:
adding, in the business configuration root action, a traversal action is shortly referred to as a production configuration traversal action for the convenience of describing the description, wherein the traversal action is an operator action which is traversally performed on all instances of a specified software component class, and wherein, inside the traversal action, there is a sequence of nodes each of which accommodates an action;
adding, in the sequence of nodes inside the production configuration traversal action, an increment action which is shortly referred to as the production serial number increment action for the convenience of describing the description, wherein the increment action is a prefabricated operator action with a function for allowing an integer to increase by one; adding, in the sequence of nodes inside the production configuration traversal action, an assignment action which is shortly referred to as the production serial number assignment action;
adding, in the business configuration root action, a traversal action which is shortly referred to as the purchase configuration traversal action;
adding, in the sequence of nodes inside the purchase configuration traversal action, an increment action which is shortly referred to as the purchase serial number increment action; adding, in the sequence of nodes inside the purchase configuration traversal action, an assignment action which is shortly referred to as the purchase serial number assignment action;
adding, in the business configuration root action, an assignment action which is shortly referred to as the sales serial number reset action; adding, in the business configuration root action, a traversal action which is shortly referred to as the sales configuration traversal action;
adding, in the sequence of nodes inside the sales configuration traversal action, an increment action which is shortly referred to as the sales serial number increment action; adding, in the sequence of nodes inside the sales configuration traversal action, an assignment action which is shortly referred to as the sales serial number assignment action; adding, in the sequence of nodes inside the sales configuration traversal action, a traversal action which is shortly referred to as the sales-production configuration traversal action;
adding, in the sequence of nodes inside the sales-production configuration traversal action, a consistency comparison action which is shortly referred to as the sales-production configuration comparison action and which is an operator action with a decision function for comparing whether or not two inputs are consistent; adding, in the sequence of nodes inside the sales-production configuration traversal action, a condition action which is shortly referred to as the sales-production configuration condition action, which is an operator action with a condition logic function;
adding, in the "true" branch of the sales-production configuration condition action, an assignment action which is shortly referred to as the sales-production product name assignment action;
adding, in the sequence of nodes inside the sales configuration traversal action, a traversal action which is shortly referred to as the sales-purchase configuration traversal action;
adding, in the sequence of nodes inside the sales-purchase configuration traversal action, a consistency comparison action which is shortly referred to as the sales-purchase configuration comparison action; adding, in the sequence of nodes inside the sales-purchase configuration traversal action, a condition action which is shortly referred to as the sales-purchase configuration condition action;
adding, in the "true" branch of the sales-purchase configuration condition action, an assignment action which is shortly referred to as the sales-purchase product name assignment action.

### Business operation process model

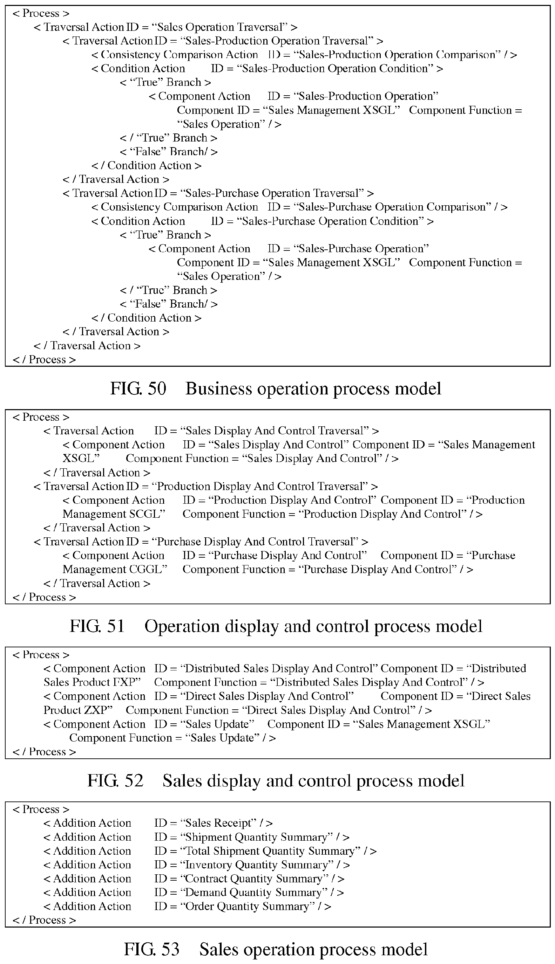

As shown in Fig. 50, the construction procedure of the business operation process model is similar to that of "main business procedure process model" and the content thereof is as follows:
adding, in the business operation root action, a traversal action which is shortly referred to as the sales operation traversal action;
adding, in the sequence of nodes inside the sales operation traversal action, a traversal action which is shortly referred to as the sales-production operation traversal action;
adding, in the sequence of nodes inside the sales-production operation traversal action, a consistency comparison action which is shortly referred to as the sales-production operation comparison action; adding, in the sequence of nodes inside the sales-production operation traversal action, a condition action which is shortly referred to as the sales-production operation condition action;
adding, in the "true" branch of the sales-production operation traversal action, an action based on the sales operation function of the sales management XSGL software component class, shortly referred to as a sales-production operation action;
adding, in the sequence of nodes inside the sales operation traversal action, a traversal action which is shortly referred to as the sales-purchase operation traversal action;
adding, in the sequence of nodes inside the sales-purchase operation traversal action, a consistency comparison action which is shortly referred to as the sales-purchase operation comparison action; adding, in the sequence of nodes inside the sales-purchase operation traversal action, a condition action which is shortly referred to as the sales-purchase operation condition action;
adding, in the "true" branch of the sales-purchase operation traversal action, an action based on the sales operation function of the sales management XSGL software component class, shortly referred to as a sales-purchase operation action.

### Operation display and control process model

As shown in Fig. 51, the construction procedure of the operation display and control process model is similar to that of "main business procedure process model" and the content thereof is as follows:
adding, in the operation display and control root action, a traversal action which is shortly referred to as the sales display and control traversal action;
adding, in the sequence of nodes in the sales display and control traversal action, an action based on the sales display and control function of the sales management XSGL software component class, shortly referred to as a sales display and control action;
adding, in the operation display and control root action, a traversal action which is shortly referred to as the production display and control traversal action;
adding, in the sequence of nodes in the production display and control traversal action, an action based on the production display and control function of the production management SCGL software component class, shortly referred to as a production display and control action;
adding, in the operation display and control root action, a traversal action which is shortly referred to as the purchase display and control traversal action;
adding, in the sequence of nodes in the purchase display and control traversal action, a component action based on the purchase display and control function of the purchase management CGGL software component class, shortly referred to as a purchase display and control action.

### Sales display and control process model

As shown in Fig. 52, the construction procedure of the sales display and control process model is similar to that of "main business procedure process model" and the content thereof is as follows:
adding, in the sales display and control root action, a component action based on the distributed sales display and control function of the distributed sales product FXP software component class, shortly referred to as a distributed sales display and control action; adding, in the sales display and control root action, a component action based on the direct sales display and control function of the direct sales product ZXP software component class, shortly referred to as a direct sales display and control action; adding, in the sales display and control root action, a component action based on the sales update function of the involved software component class, shortly referred to as a sales update action.

### Sales operation process model

As shown in Fig. 53, the construction procedure of the sales operation process model is similar to that of "main business procedure process model" and the content thereof is as follows:
adding, in the sales operation root action, an addition action which is shortly referred to as the sales receipt action and which is an operator action with an addition function; adding, in the sales operation root action, an addition action which is shortly referred to as the shipment quantity summary action; adding, in the sales operation root action, an addition action which is shortly referred to as the total shipment quantity summary action; adding, in the sales operation root action, a subtraction action which is shortly referred to as the inventory quantity summary action; adding, in the sales operation root action, an addition action which is shortly referred to as the contract quantity summary action; adding, in the sales operation root action, an addition action which is shortly referred to as the demand quantity summary action; adding, in the sales operation root action, a subtraction action which is shortly referred to as the order quantity summary action.

### Production display and control process model

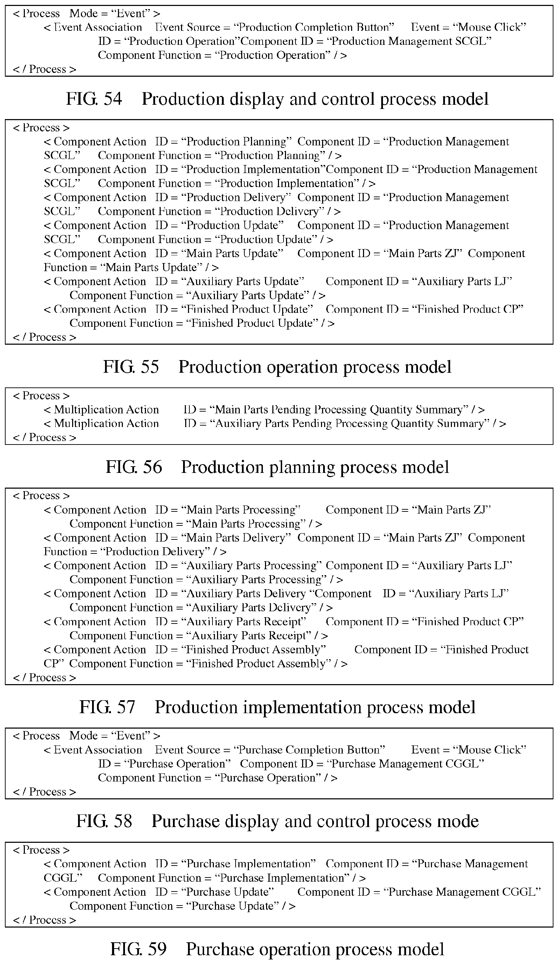

As shown in Fig. 54, the construction procedure of the production display and control process model is similar to that of "main business procedure process model" and the content thereof is as follows:
adding an action based on the production operation function of the involved software component class, shortly referred to as a production operation action; establishing an event association between the mouse click event of the production completion button element in the production display interaction model and the production operation action.

### production operation process model

As shown in Fig. 55, the construction procedure of the production operation process model is similar to that of "main business procedure process model" and the content thereof is as follows:
adding, in the production operation root action, an action based on the production planning function of the involved software component class, shortly referred to as a production planning action; adding, in the production operation root action, an action based on the production implementation function of the involved software component class, shortly referred to as a production implementation action; adding, in the production operation root action, an action based on the production delivery function of the involved software component class, shortly referred to as a production delivery action; adding, in the production operation root action, an action based on the production update function of the involved software component class, shortly referred to as a production update action; adding, in the production operation root action, an action based on the main parts update function of the main parts ZJ software component class, shortly referred to as a main parts update action; adding, in the production operation root action, an action based on the auxiliary parts update function of the auxiliary parts LJ software component class, shortly referred to as an auxiliary parts update action; adding, in the production operation root action, an action based on the finished product update function of the finished product CP software component class, shortly referred to as a finished product update action.

### Production planning process model

As shown in Fig. 56, the construction procedure of the production planning process model is similar to that of "main business procedure process model" and the content thereof is as follows:
adding, in the production planning root action, a multiplication action which is shortly referred to as the main parts pending processing quantity summary action and which is an operator action based on the multiplication function of the multiplication operator; adding, in the production planning root action, another multiplication action which is shortly referred to as the auxiliary parts pending processing quantity summary action.

### Production implementation process model

As shown in Fig. 57, the construction procedure of the production implementation process model is similar to that of "main business procedure process model" and the content thereof is as follows:
adding, in the production implementation root action, an action based on the main parts processing function of the main parts ZJ software component class, shortly referred to as a main parts processing action; adding, in the production implementation root action, an action based on the main parts delivery function of the main parts ZJ software component class, shortly referred to as a main parts delivery action; adding, in the production implementation root action, an action based on the auxiliary parts processing function of the auxiliary parts LJ software component class, shortly referred to as an auxiliary parts processing action; adding, in the production implementation root action, an action based on the auxiliary parts delivery function of the auxiliary parts LJ software component class, shortly referred to as an auxiliary parts delivery action; adding, in the production implementation root action, an action based on the auxiliary parts receipt function of the finished product CP software component class, shortly referred to as an auxiliary parts receipt action; adding, in the production implementation root action, an action based on the finished product assembly function of the finished product CP software component class, shortly referred to as a finished product assembly action.

### Purchase display and control process model

As shown in Fig. 58, the construction procedure of the purchase display and control process model is similar to that of "main business procedure process model" and the content thereof is as follows:
adding an action based on the purchase operation function of the involved software component class, shortly referred to as a purchase operation action; establishing an event association between the mouse click event of the purchase completion button element in the purchase display interaction model and the purchase operation action.

### Purchase operation process model

As shown in Fig. 59, the construction procedure of the purchase operation process model is similar to that of "main business procedure process model" and the content thereof is as follows:
adding, in the purchase operation root action, an action based on the purchase implementation function of the purchase management CGGL software component class, shortly referred to as a purchase implementation action; adding, in the purchase operation root action, an action based on the purchase update function of the purchase management CGGL software component class, shortly referred to as a purchase update action.

### Distributed sales display and control process model

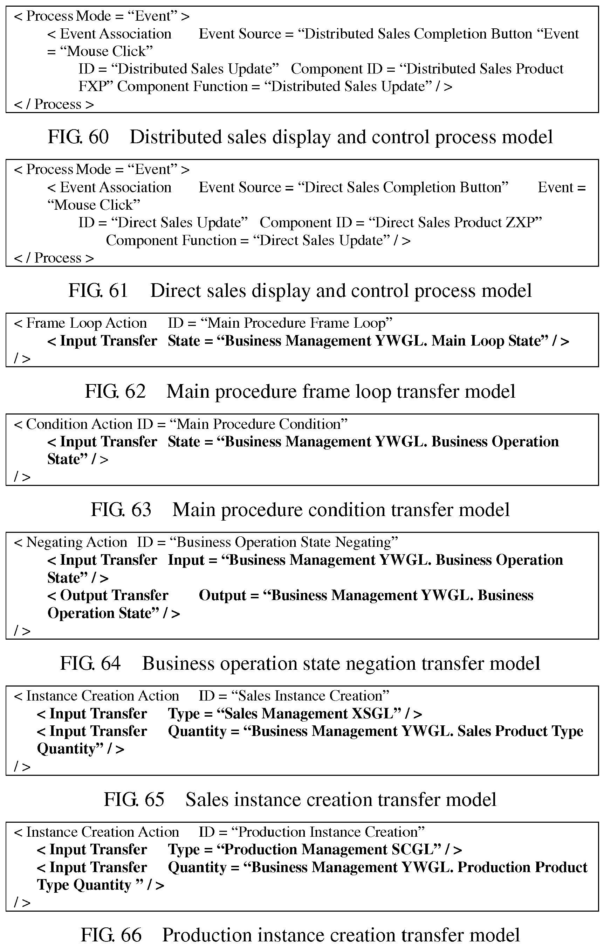

As shown in Fig. 60, the construction procedure of the distributed sales display and control process model is similar to that of "main business procedure process model" and the content thereof is as follows:
adding an action based on the distributed sales update function of the involved software component class, shortly referred to as a distributed sales update action; establishing an event association between the mouse click event of the distributed sales completion button element in the distributed sales display interaction model and the distributed sales update action.

### Direct sales display and control process model

As shown in Fig. 61, the construction procedure of the direct sales display and control process model is similar to that of "main business procedure process model" and the content thereof is as follows:
adding an action based on the direct sales update function of the involved software component class, shortly referred to as a direct sales update action; establishing an event association between the mouse click event of the direct sales completion button element in the direct sales display interaction model and the direct sales update action.

### Constructing the software transfer models

Next, the construction procedure of the software transfer model for each action will be described in detail.

### Business display transfer model

(null)

### Main procedure frame loop transfer model

Fig. 62 shows a completed main procedure frame loop transfer model whose construction procedure is as follows:
the software hierarchy mold receives and responds to the command from the actual software modeling environment to set the business management YWGL software component class as the involved software component class;
the software interface mold receives and responds to the command from the actual software modeling environment to set the main business procedure function as the involved function;
the software process mold receives command from the actual software modeling environment to set the main procedure frame loop action as the involved action; the software transfer mold constructs a software transfer model for the involved action; for simplicity, the software transfer model for main procedure frame loop action is shortly referred to as the main procedure frame loop transfer model in accordance with name of the involved action; names of software transfer models for other actions may be deduced by analogy, which will not be repeated; and
the software transfer mold receives the command from the actual software modeling environment to establish an input transfer from the main loop state attribute of the involved software component class to the state attribute of the involved action; the software transfer mold establishes an input transfer from the main loop state attribute of the business management YWGL software component class to the state attribute of the main procedure frame loop action in response to the foregoing command, wherein the state attribute of the main procedure frame loop action, as a Boolean variable, refers to an abbreviation of a state attribute for the business loop operation action to control whether or not operates; and names of the subsequent action's attributes may be deduced by analogy, which will not be repeated.

So far, the main procedure frame loop transfer model is accomplished.

### Main procedure condition transfer model

Fig. 63 is a completed main procedure condition transfer model whose construction procedure is similar to that of the "main procedure frame loop transfer model" and the content thereof contains the following transfer:
from the business operation state attribute of the business management YWGL software component class to the state attribute of the main procedure condition action.

### Configuration display and control transfer model

(null)

### Business operation transfer model

(null)

### Operation display and control transfer model

(null)

### Business configuration transfer model

(null)

### Business type configuration transfer model

(null)

### Business instances creation transfer model

(null)

### Business instance configuration transfer model

(null)

### Business operation state negating transfer model

Fig. 64 is a completed business operation state negating transfer model whose construction procedure is similar to that of the "main procedure frame loop transfer model" and the content thereof contains the following transfers:
from the business operation state attribute of the involved software component class to the input of the operation state negating action; and from the output of the operation state negating action to the business operation state attribute of the involved software component class.

### Sales instance creation transfer model

Fig. 65 is a completed sales instance creation transfer model whose construction procedure is similar to that of the "main procedure frame loop transfer model" and the content thereof contains the following transfers:
from the name of the sales management XSGL software component class to the type attribute of the sales instance creation action; and from the sales product type quantity attribute of the involved software component class to the instance quantity attribute of the sales instance creation action.

### Production instance creation transfer model

Fig. 66 is a completed production instance creation transfer model whose construction procedure is similar to that of the "main procedure frame loop transfer model" and the content thereof contains the following transfers:
from the name of the production management SCGL software component class to the Component class attribute of the production instance creation action; and from the production product type quantity attribute of the involved software component class to the instance quantity attribute of the production instance creation action.

### Purchase instance creation transfer model

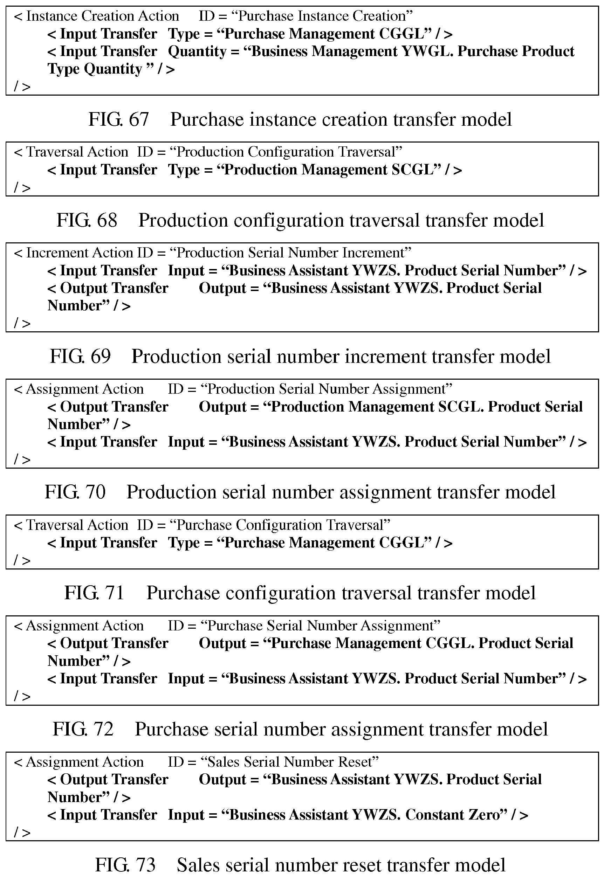

Fig. 67 is a completed purchase instance creation transfer model whose construction procedure is similar to that of the "main procedure frame loop transfer model" and the content thereof contains the following transfers:
from the name of the purchase management CGGL software component class to the Component class attribute of the purchase instance creation action; and from the purchase product type quantity attribute of the involved software component class to the instance quantity attribute of the purchase instance creation action.

### Production configuration traversal transfer model

Fig. 68 is a completed production configuration traversal transfer model whose construction procedure is similar to that of the "main procedure frame loop transfer model" and the content thereof contains the following transfer:
from the name of the production management SCGL software component class to the type attribute of the production configuration traversal action.

### Production serial number increment transfer model

Fig. 69 is a completed production serial number increment transfer model whose construction procedure is similar to that of the "main procedure frame loop transfer model" and the content thereof contains the following transfers:
from the product serial number attribute of the business assistant YWZS software component class to the input attribute of the production serial number increment action; and from the output attribute of the production serial number increment action to the product serial number attribute of the business assistant YWZS software component class.

### Production serial number assignment transfer model

Fig. 70 is a completed production serial number assignment transfer model whose construction procedure is similar to that of the "main procedure frame loop transfer model" and the content thereof contains the following transfers:
from the product serial number attribute of the business assistant YWZS software component class to the input attribute of the production serial number assignment action; and from the output attribute of the production serial number assignment action to the product serial number attribute of the production management SCGL software component class.

### Purchase configuration traversal transfer model

Fig. 71 is a completed purchase configuration traversal transfer model whose construction procedure is similar to that of the "main procedure frame loop transfer model" and the content thereof contains the following transfer:
from the name of the purchase management CGGL software component class to the type attribute of the purchase configuration traversal action.

### Purchase serial number increment transfer model

It is similar to the production serial number increment transfer model.

### Purchase serial number assignment transfer model

Fig. 72 is a completed purchase serial number assignment transfer model whose construction procedure is similar to that of the "main procedure frame loop transfer model" and the content thereof contains the following transfers:
from the product serial number attribute of the business assistant YWZS software component class to the input attribute of the purchase serial number assignment action; and from the output attribute of the purchase serial number assignment action to the product serial number attribute of the purchase management SCGL software component class.

### Sales serial number reset transfer model

Fig. 73 is a completed sales serial number reset transfer model whose construction procedure is similar to that of the "main procedure frame loop transfer model" and the content thereof contains the following transfer:
from the constant zero attribute of the business assistant YWZS software component class to the input attribute of the sales serial number reset action; and from the output attribute of the sales serial number reset action to the product serial number attribute of the business assistant YWZS software component class.

### Sales configuration traversal transfer model

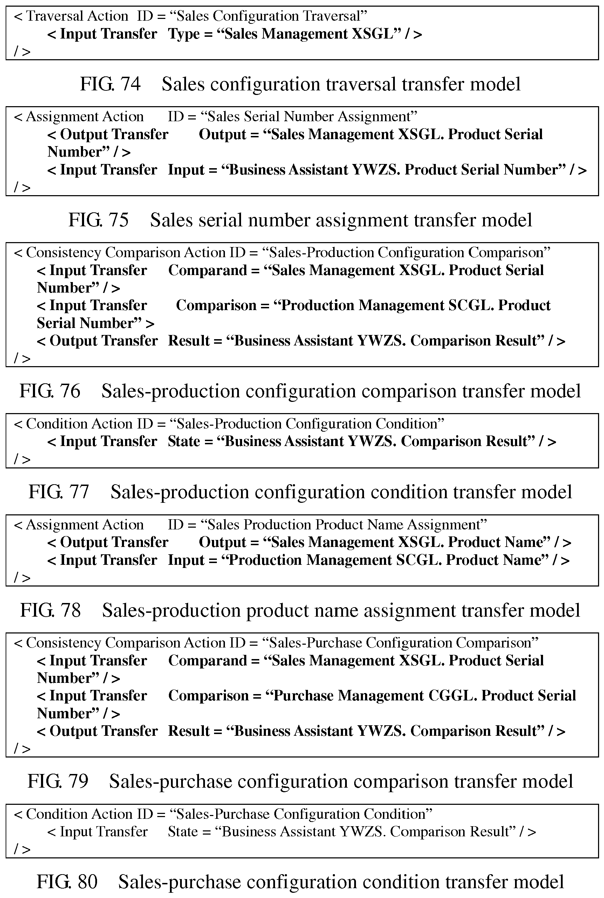

Fig. 74 is a completed sales configuration traversal transfer model whose construction procedure is similar to that of the "main procedure frame loop transfer model" and the content thereof contains the following transfer:
from the name of the sales management XSGL software component class to the type attribute of the sales configuration traversal action.

### Sales serial number increment transfer model

It is similar to the production serial number increment transfer model.

### Sales serial number assignment transfer model

Fig. 75 is a completed sales serial number assignment transfer model whose construction procedure is similar to that of the "main procedure frame loop transfer model" and the content thereof contains the following transfers:
from the product serial number attribute of the business assistant YWZS software component class to the input attribute of the sales serial number assignment action; and from the output attribute of the sales serial number assignment action to the product serial number attribute of the sales management XSGL software component class.

### Sales-production configuration traversal transfer model

It is similar to the production configuration traversal transfer model.

### Sales-production configuration comparison transfer model

Fig. 76 shows a completed sales-production configuration comparison transfer model whose construction procedure is similar to that of the "main procedure frame loop transfer model" and the content thereof contains the following transfers:
from the sales management XSGL software component class' product serial number attribute to sales-production configuration comparison action's comparison attribute; from the production management SCGL software component class' product serial number attribute to sales-production configuration comparison action's comparison attribute; and from the sales-production configuration comparison action's result attribute to the business assistant YWZS software component class' comparison result attribute.

### Sales-production configuration condition transfer model

Fig. 77 shows a completed sales-production configuration condition transfer model whose construction procedure is similar to that of the "main procedure frame loop transfer model" and the content thereof contains the following transfer:
from the business assistant YWZS software component class' comparison result attribute to sales-production configuration condition action's state attribute.

### Sales-production product name assignment transfer model

Fig. 78 shows a completed sales-production product name assignment transfer model whose construction procedure is similar to that of the "main procedure frame loop transfer model" and the content thereof contains the following transfers:
from the production management SCGL software component class' product name attribute to sales-production product name assignment action's input attribute; and from the sales-production product name assignment action's output attribute to sales management XSGL software component class' product name attribute.

### Sales-purchase configuration traversal transfer model

It is similar to the purchase configuration traversal transfer model.

### Sales-purchase configuration comparison transfer model

Fig. 79 shows a completed sales-purchase configuration comparison transfer model whose construction procedure is similar to that of the "main procedure frame loop transfer model" and the content thereof contains the following transfers:
from the sales management XSGL software component class' product serial number attribute to the sales-purchase configuration comparison action's comparison attribute; from the purchase management CGGL software component class' product serial number attribute to sales-purchase configuration comparison action's comparison attribute; and from the sales-purchase configuration comparison action's result attribute to business assistant YWZS software component class' comparison result attribute.

### Sales-purchase configuration condition transfer model

Fig. 80 shows a completed sales-purchase configuration condition transfer model whose construction procedure is similar to that of the "main procedure frame loop transfer model" and the content thereof contains the following transfers:
from the business assistant YWZS software component class' comparison result attribute to the sales-purchase configuration condition action's state attribute.

### Sales-purchase product name assignment transfer model

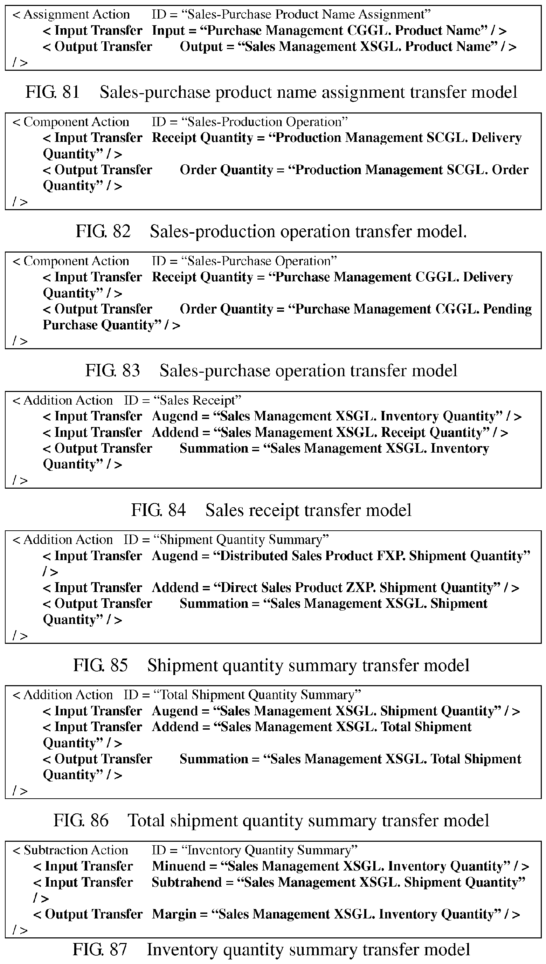

Fig. 81 shows a completed sales-purchase product name assignment transfer model whose construction procedure is similar to that of the "main procedure frame loop transfer model" and the content thereof contains the following transfers:
from the purchase management CGGL software component class' product name attribute to sales-purchase product name assignment action's input attribute; and from sales-purchase product name assignment action's output attribute to sales management XSGL software component class' product name attribute.

### Sales operation traversal transfer model

It is similar to the sales configuration traversal transfer model.

### Sales-production operation traversal transfer model

It is similar to the sales-production configuration traversal transfer model.

### Sales-production operation comparison transfer model

It is similar to the sales-production configuration comparison transfer model.

### Sales-production operation condition transfer model

It is similar to the sales-production configuration condition transfer model.

### Sales-production operation transfer model

Fig. 82 shows a completed sales-production operation transfer model whose construction procedure is similar to that of the "main procedure frame loop transfer model" and the content thereof contains the following transfers:
from the production management SCGL software component class' delivery quantity attribute to sales-production operation action's receipt quantity attribute; and from the sales-production operation action's order quantity attribute to production management SCGL software component class' order quantity attribute.

### Sales-purchase operation traversal transfer model

It is similar to the sales-purchase configuration traversal transfer model.

### Sales-purchase operation comparison transfer model

It is similar to the sales-purchase configuration comparison transfer model.

### Sales-purchase operation condition transfer model

It is similar to the sales-purchase configuration condition transfer model.

### Sales-purchase operation transfer model

Fig. 83 shows a completed sales-purchase operation transfer model whose construction procedure is similar to that of the "main procedure frame loop transfer model" and the content thereof contains the following transfers:
from the purchase management CGGL software component class' delivery quantity attribute to the sales-purchase operation action's receipt quantity attribute; and from the sales-purchase operation action's order quantity attribute to sales management XSGL software component class' pending purchase quantity attribute.

### Sales receipt transfer model

Fig. 84 shows a completed sales receipt transfer model whose construction procedure is similar to that of the "main procedure frame loop transfer model" and the content thereof contains the following transfers:
from the inventory quantity attribute of the sales management XSGL software component class to the augend attribute of the sales receipt action; from the receipt quantity attribute of the sales management XSGL software component class to the addend attribute of the sales receipt action, and from the summation attribute of the sales receipt action to the inventory quantity attribute of the sales management XSGL software component class.

### Shipment quantity summary transfer model

Fig. 85 is a completed shipment quantity summary transfer model whose construction procedure is similar to that of the "main procedure frame loop transfer model" and the content thereof contains the following transfers:
from the shipment quantity attribute of the distributed sales product FXP software component class to the augend attribute of the shipment quantity summary action; from the shipment quantity attribute of the direct sales product ZXP software component class to the addend attribute of the shipment quantity summary action; and from the summation attribute of the shipment quantity summary action to the shipment quantity attribute of the sales management XSGL software component class.

### Total shipment quantity summary transfer model

Fig. 86 is a completed total shipment quantity summary transfer model whose construction procedure is similar to that of the "main procedure frame loop transfer model" and the content thereof contains the following transfers:
from the shipment quantity attribute of the sales management XSGL component class to the augend attribute of the total shipment quantity summary action; from the total shipment quantity attribute of the sales management XSGL software component class to the addend attribute of the total shipment quantity summary action; and from the summation attribute of the total shipment quantity summary action to the total shipment quantity attribute of the sales management XSGL software component class.

### Inventory quantity summary transfer model

Fig. 87 is a completed inventory quantity summary transfer model whose construction procedure is similar to that of the "main procedure frame loop transfer model" and the content thereof contains the following transfers:
from the inventory quantity attribute of the sales management XSGL component class to the minuend attribute of the inventory quantity summary action; from the shipment quantity attribute of the sales management XSGL software component class to the subtrahend attribute of the inventory quantity summary action, and from the margin attribute of the inventory quantity summary action to the inventory quantity attribute of the sales management XSGL software component class.

### Contract quantity summary transfer model

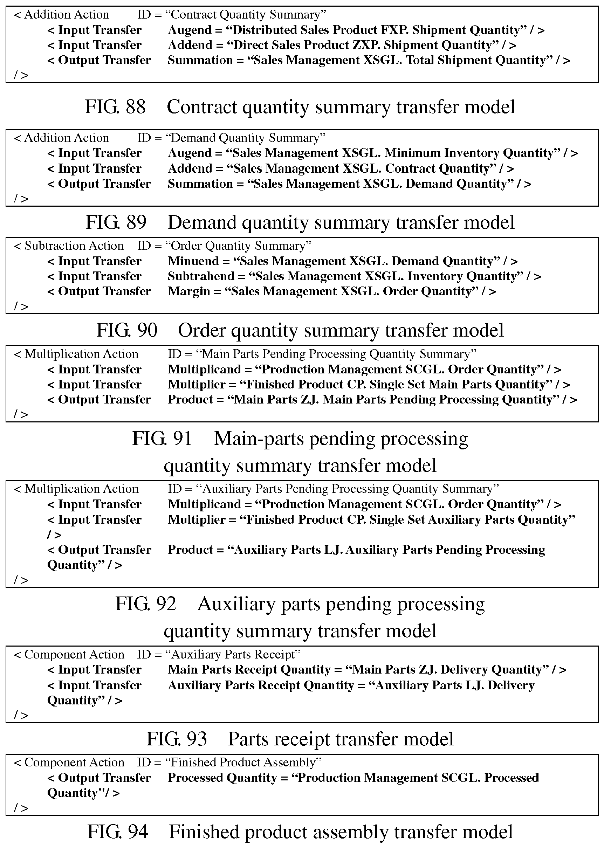

Fig. 88 is a completed contract quantity summary transfer model whose construction procedure is similar to that of the "main procedure frame loop transfer model" and the content thereof contains the following transfers:
from the contract quantity attribute of the distributed sales product FXP software component class to the augend attribute of the contract quantity summary action; from the contract quantity attribute of the direct sales product ZXP software component class to the addend attribute of the contract quantity summary action, and from the summation attribute of the contract quantity summary action to the contract quantity attribute of the sales management XSGL software component class.

### Demand quantity summary transfer model

Fig. 89 is a completed demand quantity summary transfer model whose construction procedure is similar to that of the "main procedure frame loop transfer model" and the content thereof contains the following transfers:
from the contract quantity attribute of the sales management XSGL component class to the augend attribute of the demand quantity summary action; from the minimum inventory attribute of the sales management XSGL software component class to the addend attribute of the demand quantity summary action, and from the summation attribute of the demand quantity summary action to the demand quantity attribute of the sales management XSGL software component class.

### Order quantity summary transfer model

Fig. 90 is a completed order quantity summary transfer model whose construction procedure is similar to that of the "main procedure frame loop transfer model" and the content thereof contains the following transfers:
from the demand quantity attribute of the sales management XSGL component class to the minuend attribute of the order quantity summary action; from the inventory quantity attribute of the sales management XSGL software component class to the subtrahend attribute of the order quantity summary action, and from the margin attribute of the order quantity summary action to the order quantity attribute of the sales management XSGL software component class.

### Sales display and control transfer model

(null)

### Distributed sales display and control transfer model

(null)

### Direct sales display and control transfer model

(null)

### Sales update transfer model

(null)

### Production display and control traversal transfer model

It is similar to the production configuration traversal transfer model.

### Production display and control transfer model

(null)

### Production operation transfer model

(null)

### Production planning transfer model

(null)

### Production implementation transfer model

(null)

### Production delivery transfer model

(null)

### Production update transfer model

(null)

### Main parts pending processing quantity summary transfer model

Fig. 91 is a completed main parts pending processing quantity summary transfer model whose construction procedure is similar to that of the "main procedure frame loop transfer model" and the content thereof contains the following transfers:
from the order quantity attribute of the production management SCGL software component class to the multiplicand attribute of the main parts pending processing quantity summary action; from the single set main parts quantity attribute of the finished product CP software component class to the multiplier attribute of the main parts pending processing quantity summary action; and from the product attribute of the main parts pending processing quantity summary action to the pending processing quantity attribute of the main parts ZJ software component class.

### Auxiliary parts pending processing quantity summary transfer model

Fig. 92 is a completed auxiliary parts pending processing quantity summary transfer model whose construction procedure is similar to that of the "main procedure frame loop transfer model" and the content thereof contains the following transfers:
from the order quantity attribute of the production management SCGL software component class to the multiplicand attribute of the auxiliary parts pending processing quantity summary action; from the single set auxiliary parts quantity attribute of the finished product CP software component class to the multiplier attribute of the auxiliary parts pending processing quantity summary action; and from the product attribute of the auxiliary parts pending processing quantity summary action to the pending processing quantity attribute of the auxiliary parts LJ software component class.

### Main parts processing transfer model

(null)

### Main parts delivery transfer model

(null)

### Auxiliary parts processing transfer model

(null)

### Auxiliary parts delivery transfer model

(null)

### Parts receipt transfer model

Fig. 93 is a completed parts receipt transfer model whose construction procedure is similar to that of the "main procedure frame loop transfer model" and the content thereof contains the following transfers:
from the delivery quantity attribute of the main parts ZJ software component class to the main parts receipt quantity attribute of the parts receipt action; and from the delivery quantity attribute of the auxiliary parts LJ software component class to the auxiliary parts receipt quantity attribute of the parts receipt action.

### Finished product assembly transfer model

Fig. 94 is a completed finished product assembly transfer model whose construction procedure is similar to that of the "main procedure frame loop transfer model" and the content thereof contains the following transfer:
from the processed quantity attribute of the finished product assembly action to the processed quantity attribute of the production management SCGL software component class.

### Main parts update transfer model

(null)

### auxiliary parts update transfer model

(null)

### Finished product update transfer model

(null)

### Purchase display and control transfer model

(null)

### Purchase operation transfer model

(null)

### Purchase implementation transfer model

(null)

### Purchase update transfer model

(null)

Thereby, the business management YWGL software model constituted by a software hierarchy model, software interaction models, software interface models, software algorithm models, software process models, and software transfer models in this embodiment has been accomplished.

This embodiment demonstrates how a regular management personnel, without knowledge of any existing complex software modeling languages, without knowledge of any computer programming language, and without dependence on any professional modeler nor any application developer, by using the present invention, independently constructs an executable business management software model based on his vision in business management within a relatively short period of time. The constructed software model is not only clear and simple but also the quality of the constructed software model is significantly higher and the time spent is significantly shorter.

Compared with developing a business management software model with the cooperation of professional modelers and/or application developers, the present invention by which the same manager independently develops the business management software model, achieves remarkable results as follows:
(1) higher quality: the completed software model meets the minds of the managers and avoids the possible bias in understanding of the business management software model between the managers and professional modelers or application developers;
(2) shorter time spent: the entire period of time spent to model is shortened to 1/5 of the original time period because the complex and frequent communications between the managers and the professional modelers or the application developers are eliminated, thereby greatly saving energy and money.

## Claims

1. Software element model based univeral software modeling method to construct software model, by means of a computer readable storage medium having a computer readable program code stored therein, the computer readable program code containing instructions executable by a processor of a computer software to implement a method of constructing software model by processing data conforming to the software element model and describing the software model, the software model describing a software system, the software element model comprising:
a software hierarchy mold which describes the software hierarchy model of the software model in a tree structure whose nodes are software component classes and which is used as a template to be configured in an actual software modeling environment to form the software hierarchy model of the software model, wherein the software hierarchy model refers to the hierarchy relationships constituted by the software component classes as the nodes in the software model, wherein the software component class refers to a set of software component instances with the same external features, and wherein the tree structure, whose nodes are the software component classes, is referred as a hierarchy tree;
a software interface mold which describes software interface models by an optional structure of an attribute set, a function set, and an event set, the software interface mold is used as a template in the actual software modeling environment to be configured to form the software interface models, wherein the software interface models refer to external features of the software component classes, wherein the functions in the function set include software interaction functions, software algorithm functions, and software process functions, wherein the software interaction function is implemented by a software interaction model, wherein the software algorithm function is implemented by a software algorithm model, and wherein the software process function is implemented by a combination of software process models and software transfer models;
a software interaction module which describes the software interaction models by a tree structure whose nodes are interaction elements and which is used as a template in the actual software modeling environment to be configured to form the software interaction models, wherein the software interaction model refers to a description of a way for implementing the software interaction function with a combination of the interaction elements and the interaction element refers to a functional element for interacting information with the actual software modeling environment;
a software algorithm mold which describes software algorithm models by a tree structure whose nodes are operators and which is used as a template in the actual software modeling environment to be configured to form the software algorithm model, wherein the software algorithm model refers to a description of the algorithm which implements the software algorithm function by using the combination of operators, and wherein the operator refers to a component with a previously realized specific function;
a software process mold which describes software process models by combining actions as nodes and which is used as a template in the actual software modeling environment to configure the software process models, wherein the software process model refers to a description of a way of the software process function which is implemented using a combination of the actions and wherein the action refers to an execution of a function;
a software transfer mold which describes software transfer models by a transfer set and which is used as a template in the actual software modeling environment to be configured to form the software transfer models, wherein the software transfer model refers to transfer relationships of the data of involved actions and a transfer in the transfer set is a transfer relationship of the data between one attribute and another attribute;
specific steps to construct the software model described by the six molds being as follows:
1) constructing the software hierarchy model: the software hierarchy mold reading in software hierarchy model commands from the actual software modeling environment, wherein the software hierarchy model command refers to command such as creating a software component class, adding a software component class, selecting a software component class, naming a software component class, or deleting a software component class for the hierarchy tree and wherein the software hierarchy mold performs corresponding operations on the software component class nodes in response to the software hierarchy model commands to obtain the software hierarchy model;
2) constructing the software interface models: constructing the software interface model for each software component class of the software hierarchy model obtained in the step 1), the steps for constructing each software interface model including: the software interface mold reading in software interface model commands from the actual software modeling environment, wherein the software interface model command refers to command such as creating, naming, or deleting the attributes, the functions, and the events, wherein the software interface mold performs corresponding operations in response to the software interface model commands to obtain the software interface model, and wherein the software interaction models for implementing software interaction functions are constructed by step 3), wherein the software algorithm models for implementing software algorithm functions are constructed by step 4), and wherein the software process models for implementing software process functions are constructed by the step 5);
3) constructing the software interactive models: constructing the software interaction model for each software interaction function obtained in the step 2), steps for constructing each software interaction model including: the software interaction mold reading in software interaction model commands from the actual software modeling environment;
4) constructing the software algorithm models: constructing the software algorithm model for each software algorithm function obtained in the step 2), the steps for constructing each software algorithm model including: the software algorithm mold reading in software algorithm model commands from the actual software modeling environment;
5) constructing the software process models: constructing the software process model for each software process function obtained in the step 2), the steps for constructing each software process model including: the software process mold reading in software process model commands from the actual software modeling environment; and
6) constructing the software transfer models: constructing the software transfer model for each action in the software process models obtained in the step 5), the steps for constructing each software transfer model including: the software transfer mold reading in software transfer model commands from the actual software modeling environment, wherein the software transfer model command refers to the command such as adding a transfer, adding a transfer, or deleting a transfer and wherein the software transfer mold performs corresponding operations in response to the software transfer model commands to obtain the software transfer model,
thereby the software model constructed by the software hierarchy model, the software interface models, the software algorithm models, the software process models, and the software transfer models is accomplished.

2. Software element model based univeral software modeling method to construct software model in claim 1, wherein a combination of the software process mold and the software transfer mold provide a universal means to describe and configure functions; the software interaction mold provides a simplified alternative for replacing the combination of the software process mold and the software transfer mold if only interaction elements are used to implement the functions.

3. Software element model based univeral software modeling method to construct software model in claim 1, wherein a combination of the software process mold and the software transfer mold provide a universal means to describe and configure functions; the software algorithm mold provides a simplified alternative for replacing the combination of the software process mold and the software transfer mold if only operators are used to implement the functions.

4. Software element model based univeral software modeling method to construct software model in claim 1, wherein the software element model employs a parent-child structure as a base recursive unit to recursively describe the software model; the parent-child structure refers to a structure of parent-child relationships in a hierarchy tree, constituted by an involved software component class and all child software component classes thereof.

5. Software element model based univeral software modeling method to construct software model in claim 1, wherein the specific function of the step 2) can only be any one of the software interaction function, the software algorithm function, and software process function.

6. Software element model based univeral software modeling method to construct software model in claim 1, wherein the software interaction model commands for constructing the software interaction model in the step 3) refer to commands, such as adding an interaction element, selecting an interaction element, naming an interaction element, and deleting an interaction element, and the software interaction mold performs corresponding operations in response to the software interaction model commands to obtain the software interaction model; the interaction elements include operator interaction elements and component interaction elements; the operator interaction element refers to a component with a previously realized specific function and the component interaction element refers to one execution of the interaction function in a set of the interaction functions in the parent-child structure, the set of the interaction functions in the parent-child structure refers to a collection constituted by all interaction functions of the involved component class and all interaction functions of all child component classes thereof in the parent-child structure, the tree structure of which the nodes are the interaction elements is referred to as an interaction tree.

7. Software element model based univeral software modeling method to construct software model in claim 1, wherein the software algorithm model commands for constructing the software algorithm model in the step 4) refer to commands, such as adding an operator, selecting an operator, naming an operator, and deleting an operator, as well as adding an assignment, selecting an assignment, and deleting an assignment, and the software algorithm mold performs corresponding operations in response to the software algorithm model commands to obtain the software algorithm model; the operators include logic operators with logic functions and computation operators with calculation functions; the tree structure whose nodes are operators is referred to as an algorithm tree; the assignment refers to an assignment relationship between two attributes in a set of the algorithm attributes; and the set of the algorithm attributes refers to a collection constituted by a set of attributes of the involved software component classes, a set of attributes of all operators, and a set of attributes of all interaction elements in the software interaction model.

8. Software element model based univeral software modeling method to construct software model in claim 1, wherein the software process model commands for constructing the software process model in step 5) refer to commands such as adding an action, selecting an action, naming an action, and deleting an action and the software process mold performs a corresponding operation in response to the software process model commands to obtain the software process model; the actions include both component actions and operator actions; the component action refers to one execution of the functions in the function set in the parent-child structure, the function set in the parent-child structure refers to a collection constituted by the function set of the involved software component class and function sets of all child software component classes in the parent-child structure; the operator action refers to one execution of operator's function; the software process models include attribute process models and event process model, the software process mold includes attribute process molds and event process mold, and the attribute process mold describes an attribute process model through a process tree as the structure, which is a tree structure constituted by actions as nodes; the event process mold describes an event process model by a set of event associations as the structure; the event association in the set of event associations is an association relationship between an event in a set of events in a parent-child structure and an operator action or a component action; the event set in the parent-child structure is a collection constituted by the event set of the involved software component class and the event sets of all interaction elements in the interaction model thereof and the event sets of all child software component classes and the event sets of all interaction elements in the interaction model thereof, in the parent-child structure.

9. Software element model based univeral software modeling method to construct software model in claim 1, wherein, besides action attributes which refers to the attribute of the component class where the action is, the attributes relevant to transfers are limited to the parent-child attribute set, which refers to a collection constituted by the attribute set of the involved software component classes and attribute sets of all child software component classes thereof in the parent-child structure.
